# EUROPÄISCHE PATENTSCHRIFT

(11) **EP 2 652 030 B1**
(45) Veröffentlichungstag und Bekanntmachung des Hinweises auf die Patenterteilung: **18.09.2019**
(21) Anmeldenummer: 11801699.7
(22) Anmeldetag: 15.12.2011
(51) Int. Cl.: C08K 5/00, C08K 3/00, C08K 3/24, C08K 3/38

(54) **POLYMER-ZUSAMMENSETZUNG MIT WÄRME-ABSORBIERENDEN EIGENSCHAFTEN UND HOHER STABILITÄT GEGEN BEWITTERUNG**
POLYMER COMPOSITION HAVING HEAT-ABSORBING PROPERTIES AND HIGH RESISTANCE TO WEATHERING
COMPOSITION POLYMÈRE PRÉSENTANT DES PROPRIÉTÉS D'ABSORPTION DE LA CHALEUR ET UNE GRANDE STABILITÉ AUX INTEMPÉRIES

(30) Priorität: 17.12.2010 IT RM20100669
(43) Veröffentlichungstag der Anmeldung: 23.10.2013
(73) Patentinhaber: Covestro Deutschland AG, 51373 Leverkusen (DE)
(72) Erfinder: MEYER, Alexander, 40489 Düsseldorf (DE); REICHENAUER, Joerg, 47802 Krefeld (DE); SCAGNELLI, Andrea, 24040 Bonate Sotto (BG) (IT); TARAVELLA, Vincenzo, 24125 Bergamo (IT)
(74) Vertreter: Levpat
(86) Internationale Anmeldenummer: PCT/EP2011/072915
(87) Internationale Veröffentlichungsnummer: WO 2012/080397

(56) Entgegenhaltungen:
- EP-A1- 1 865 027
- WO-A-2008/134517
- WO-A1-2007/067462
- WO-A1-2007/130607
- WO-A1-2009/064860
- WO-A1-2010/092013

## Beschreibung

Die Erfindung betrifft eine Infrarotstrahlung-(IR)-absorbierende Polymer-Zusammensetzung enthaltend einen transparenten thermoplastischen Kunststoff, einen anorganischen Infrarotabsorber, nachfolgend auch als IR-Absorber bezeichnet, optional ein anorganisches nanoskaliges Pigment und die Kombination von mindestens einem organischen Farbmittel spezieller Struktur sowie die Herstellung und Verwendung der erfindungsgemäßen Polymer-Zusammensetzungen und die daraus hergestellten Erzeugnisse. Insbesondere betrifft die vorliegende Erfindung Zusammensetzungen, welche eine hohe Stabilität - insbesondere auch eine hohe Farbstabilität - gegen Bewitterung sowohl im sichtbaren als auch im IR-Bereich aufweisen. Die Erfindung betrifft ferner die Verwendung der erfindungsgemäßen Polymer-Zusammensetzung enthaltend diese IR-Absorber/Farbmittelkombinationen zur Herstellung von Scheiben für den Einsatz in Gebäuden, Kraftfahrzeugen und Schienen- oder Luftfahrzeugen.

Insbesondere betrifft die Erfindung Zusammensetzungen für Verscheibungselemente, welche eine verhältnismäßig hohe Lichttransmission im Bereich von 15 - 80 % aufweisen.

Verscheibungen aus Zusammensetzungen, enthaltend transparente thermoplastische Polymere wie z.B. Polycarbonat, bieten für den Einsatz im Fahrzeugbereich und für Gebäude viele Vorteile gegenüber herkömmlichen Verscheibungen aus Glas. Hierzu zählen z.B. erhöhte Bruchsicherheit und/oder Gewichtsersparnis, die im Fall von Automobilverscheibungen eine höhere Insassensicherheit bei Verkehrsunfällen und einen niedrigeren Kraftstoffverbrauch ermöglichen. Schließlich lassen transparente Werkstoffe, die transparente thermoplastische Polymere enthalten, aufgrund der einfacheren Formbarkeit eine wesentlich größere Designfreiheit zu.

Nachteilig ist allerdings, daß die hohe Wärmedurchlässigkeit (d.h. Durchlässigkeit für IR-Strahlung) von transparenten thermoplastischen Polymeren bei Sonneneinwirkung zu einer unerwünschten Erwärmung im Inneren von Fahrzeugen und Gebäuden führt. Die erhöhten Temperaturen im Innenraum vermindern den Komfort für die Insassen bzw. Bewohner und können erhöhte Anforderungen an die Klimatisierung nach sich ziehen, die wiederum den Energieverbrauch steigern und so die positiven Effekte wieder aufheben. Um dennoch der Forderung nach einem geringen Energieverbrauch verbunden mit einem hohen Insassenkomfort Rechnung zu tragen, sind Scheiben erforderlich, die mit einem entsprechenden Wärmeschutz ausgerüstet sind. Dies gilt insbesondere für den Automobilbereich.

Wie seit langem bekannt ist, entfällt der größte Teil der solaren Energie neben dem sichtbaren Bereich des Lichts zwischen 400 nm und 750 nm auf den Bereich des nahen Infrarots (NIR) zwischen 750 nm und 2500 nm. Eindringende Sonnenstrahlung wird z.B. im Inneren eines Automobils absorbiert und als langwellige Wärmestrahlung mit einer Wellenlänge von 5 µm bis 15 µm emittiert. Da in diesem Bereich übliche Verscheibungsmaterialien -insbesondere im sichtbaren Bereich transparente thermoplastische Polymere - nicht transparent sind, kann die Wärmestrahlung nicht nach außen abstrahlen. Man erhält einen Treibhauseffekt und der Innenraum heizt sich auf. Um diesen Effekt möglichst klein zu halten, sollte daher die Transmission der Verscheibungen im NIR möglichst minimiert werden. Übliche transparente thermoplastische Polymere wie z.B. Polycarbonat sind jedoch sowohl im sichtbaren Bereich, als auch im NIR transparent.

Es werden daher z.B. Zusätze benötigt, welche im NIR eine möglichst geringe Transparenz aufweisen ohne die Transparenz im sichtbaren Bereich des Spektrums nachteilig zu beeinflussen.

Unter den transparenten thermoplastischen Kunststoffen sind Polymere basierend auf Polymethylmethacrylat (PMMA) und Polycarbonat besonders gut für die Verwendung als Verscheibungsmaterial geeignet. Aufgrund der hohen Zähigkeit besitzt insbesondere Polycarbonat ein sehr gutes Eigenschaftsprofil für derartige Einsatzzwecke.

Um diesen Kunststoffen Infrarot-absorbierende Eigenschaften zu verleihen werden daher entsprechende Infrarotabsorber als Additive eingesetzt. Insbesondere sind hierfür IR-Absorber-Systeme interessant, die über ein breites Absorptionsspektrum im NIR-Bereich (Nahes Infrarot, 750 nm - 2500 nm) bei gleichzeitig geringer Absorption im sichtbaren Bereich (geringe Eigenfarbe) verfügen. Die entsprechenden Polymer-Zusammensetzungen sollen darüber hinaus eine hohe Thermostabilität sowie eine ausgezeichnete Lichtstabilität aufweisen.

Es ist eine Vielzahl von IR-Absorbern auf Basis organischer oder anorganischer Materialien bekannt, die in transparenten Thermoplasten eingesetzt werden können.

IR-absobierende Additive auf Basis organischer Materialien haben allerdings häufig den Nachteil, dass sie eine geringe Stabilität gegenüber thermischer Belastung oder Bestrahlung aufweisen. So sind viele dieser Additive nicht genügend wärmestabil, um in transparente Thermoplaste eingearbeitet zu werden, da bei Ihrer Verarbeitung Temperaturen bis zu 350°C erforderlich sind. Darüber hinaus sind die Verscheibungen im Gebrauch oft über längere Zeiträume Temperaturen von mehr als 50°C, bedingt durch die Sonneneinstrahlung, ausgesetzt, was zur Zersetzung oder zum Abbau der organischen Absorbentien führen kann.

Ferner weisen die organischen IR-Absorber häufig keine ausreichend breite Absorptionsbande im NIR-Bereich auf, so dass ihr Einsatz als IR-Absorber in Verscheibungsmaterialien ineffizient ist

IR-absorbierende Additive auf Basis anorganischer Materialien sind im Vergleich zu organischen Additiven häufig deutlich stabiler. Auch ist der Einsatz dieser Systeme oft ökonomischer, da sie in den meisten Fällen ein deutlich günstigeres Preis/Leistungsverhältnis aufweisen. So haben Materialien auf Basis feinteiliger Boride, feinteiliger Wolframate oder Materialien auf Basis von Antimon-dotiertem Zinnoxid (ATO) oder Indium-Zinn-Oxid (ITO) sich als effiziente IR-Absorber erwiesen, da sie über eine relativ breite Absorptionsbande im IR-Bereich verfügen.

Allerdings decken IR-Absorber - auch wenn sie eine breite Absorptionsbande im IR-Bereich aufweisen - nicht den vollständigen IR-Bereich ab. Ferner weisen sie keine oder nur geringe Absorption im sichtbaren Bereich auf. Zudem werden ca. 50 % der durch eine Scheibe in ein Gebäude oder ein Fahrzeug eingetragene Energie durch Strahlung im sichtbaren Bereich des Spektrums (400 nm - 750 nm) verursacht. Deshalb müssen neben IR-Absorbern auch andere Pigmente und/oder Farbstoffe, die im sichtbaren Bereich des Lichts absorbieren, eingesetzt werden, um eine niedrige Gesamtenergietransmission sicherzustellen.

Die vorliegende Erfindung betrifft Verscheibungsmaterialien, welche eine hohe Transmission im sichtbaren Bereich sowie eine geringe Transmission im IR-Bereich aufweisen. Diese Scheiben sind vor allem für den Transport- und Infrastrukturbereich geeignet. Diese Scheiben sollen dem Nutzer aufgrund der hohen Transmission im sichtbaren Bereich des Spektrums eine gute Sicht ermöglichen. Dies ist z.B. dann erforderlich wenn eine gute Sicht auf die Umgebung, wie z.B. beim Führen eines Fahrzeugs, nötig ist. Da allerdings ein großer Teil der in den Innenraum eingetragenen Energie durch die Strahlung im sichtbaren Bereich des Spektrums verursacht wird, ist es sehr wichtig, die Energietransmission im IR-Bereich zu minimieren, um die Gesamtenergietransmission entsprechend zu begrenzen. In fast jedem Fall weisen allerdings die anorganischen IR-Absorber, welche die Energietransmission im IR-Bereich wirkungsvoll begrenzen, eine Eigenfarbe auf. Diese Eigenfarbe ist häufig unerwünscht und muss durch weitere Farbmittel korrigiert werden. Diese Farbmittel müssen allerdings eine hohe Lichtechtheit aufweisen, da sonst durch Ausbleichen der Farbstoffe nach einer gewissen Nutzungsdauer des Verscheibungselements, wieder die Eigenfarbe des IR-Absorbers zum Tragen kommt.

Scheiben, welche im Transport- bzw. Infrastrukturbereich eingesetzt werden, müssen also eine lange Lebensdauer aufweisen und dürfen während dieser Zeit nicht verspröden. Darüber hinaus sollen sich Farbe und Transparenz über die Lebensdauer nicht oder nur geringfügig verändern, ebenso wie die IR-Eigenschaften, d.h. der Schutz vor Wärmestrahlung. Ferner muss die Scheibe über eine ausreichende Kratzfestigkeit verfügen.

Aufgrund der sehr hohen geforderten Lebensdauer wird als Verscheibungsmaterial häufig Glas eingesetzt. Glas ist unempfindlich gegen UV-Strahlung, weist eine geringe Kratzempfindlichkeit auf und verändert die mechanischen Eigenschaften über lange Zeiträume nicht. Da als Pigmente und IR-Absorber stabile anorganische Oxide, wie z.B. Eisenoxid, eingesetzt werden, verändern sich die IR- und Farbeigenschaften auch über lange Zeiträume praktisch nicht. Die Verwendung dieser Pigmente in thermoplastischen Materialien ist allerdings nicht möglich, da sie zu Trübung und/oder Abbau der entsprechenden Matrix führt.

Aufgrund der oben geschilderten Vorteile von Kunststoffen besteht daher der Bedarf an Materialien, die sowohl die guten physikalischen Eigenschaften von Thermoplasten als auch die hohe Farb- und IR-Stabilität entsprechend eingefärbter Gläser aufweisen.

Um die Langlebigkeit von thermoplastischen Materialien zu verbessern, ist bekannt, diese mit UV-Schutz und/oder Kratzfestbeschichtungen zu versehen. Darüber hinaus ist eine große Anzahl von Farbmitteln bekannt, die eine hohe Lichtechtheit aufweisen. Anorganische IR-Absorber sind den organischen IR-Absorbern vorzuziehen, da sie üblicherweise über eine höhere Stabilität verfügen.

Es zeigte sich allerdings, dass die im Stand der Technik genannten thermoplastischen Zusammensetzungen nur unzureichend geeignet sind, wenn außerordentlich hohe Farb- und IR-Stabilität erforderlich sind. Dies ist z.B. der Fall, wenn Glasscheiben und Scheiben aus thermoplastischen Material zusammen verbaut werden. Hier zeigt sich, dass die Farb- und IR-Stabilität von Glas gegenüber dem thermoplastischen Material überlegen ist. Farbabweichungen fallen insbesondere dann auf, wenn diese Materialien nebeneinander verbaut werden.

Relativ neu ist die Forderung, dass der direkte solare Transmissionsgrad "Direct Solar Energy Transmitted to the inside of a Glazing" nachfolgend auch als "Solar Direct Transmittance" bezeichnet (T_{DS} gemessen nach ISO 13837) bzw. der Gesamtenergietransmissionsgrad "Total Solar Energy Transmitted to the Inside of a Glazing" nachfolgend auch als "Solar Total Transmittance" bezeichnet (T_{TS}, bestimmt nach Anhang B der ISO 13837; dabei wurde eine vertikale Anordnung für ein stehendes Fahrzeug (nach Anhang B.2 der ISO 13837) und die unter "Note 2" im Anhang B.2 der ISO 13837 angegeben Koeffizienten für Einfachglas angenommen.) einer Scheibe bestimmte Werte erreichen muss und dass diese Werte sich über die Lebensdauer einer Scheibe nicht wesentlich verändern dürfen. Derartige Forderungen werden aufgrund des Klimaschutzes zukünftig vermehrt gestellt werden.

Es bestand daher die Aufgabe eine Zusammensetzung auf Basis eines thermoplastischen Materials zur Verfügung zu stellen, welches eine hohe IR-Performance in Kombination mit guten Transmissionseigenschaften im sichtbaren Bereich aufweist. Darüber hinaus müssen diese Zusammensetzungen die Einhaltung bestimmter Kennwerte bezüglich des direkten solaren Transmissionsgrades "Solar Direct Transmittance" bzw. des Gesamtenergietransmissionsgrades "Solar Total Transmittance" von Automobil- bzw. Infrastrukturverscheibungen gewährleisten. Die Kennwerte sollen dabei nicht nur am Anfang, sondern über eine lange Lebensdauer eingehalten werden.

Das Ausbleichen von Farbmitteln führt nicht nur zur Veränderung der Farbeigenschaften sondern führt auch dazu, dass eine höhere Energietransmission auftritt. Dies wiederum bedeutet, dass die geforderten Transmissionswerte nicht mehr eingehalten werden können. Eine Veränderung im IR-Bereich ist optisch eher unauffällig, jedoch kann diese Veränderung ebenfalls zur Veränderung der Leistungsdaten bezüglich des T_{DS} -Werts bzw. des T_{TS} - Werts führen. Die damit verbundene erhöhte Wärmezufuhr in das Gebäudes oder den Innenraum des Fahrzeugs ist unerwünscht, da die Leistung der Klimatisierung erhöht werden muss.

Häufig ist es erforderlich, die Farbgebung des Formkörpers in einer bestimmten Farbe zu gestalten. Da die Atmosphäre des Innraums bzw. der Inneneinrichtung durch eine intensiv gefärbte Scheibe beeinflußt wird, ist die Farbgebung der Scheibe möglichst neutral bzw. nach Kundenvorgaben einzustellen.

Die Zusammensetzung muss unter den für Thermoplaste üblichen Temperaturen verarbeitbar sein, ohne das sich bei der Verarbeitung die Farbe oder die Leistungsdaten deutlich verändern.

Zusammensetzungen auf Basis von Polycarbonat enthaltend anorganische IR-Absorber auf Borid- und/oder Wolframatbasis sind in verschiedenen Publikationen beschrieben worden.

Aus der WO 2007/008476 A1 sind Formmassen bekannt, die insbesondere für Brillen geeignet sind und die IR-Absorber auf Borid-Basis und spezielle Ruße enthalten, wobei durch die Kombination dieser Komponenten ein synergistischer Effekt hinsichtlich der IR-absorbierenden Eigenschaften erzielt werden soll. Diese Anmeldung macht jedoch keine Angaben zur Bewitterungsstabilität und zur Stabilität der Farbmittel.

Die JP 2005-047179, JP 2005344006, JP2006249345, EP 1865027 A1, JP07033969, JP 2008214596 und EP2009057 A1 erwähnen Zusammensetzungen enthaltend IR-Absorber auf Boridbasis in Kombination mit bestimmten Farbmitteln auf Anthrachinonbasis. Jedoch werden keine stabilen Farbstoffkombinationen im Sinne der vorliegenden Erfindung offenbart.

JP 2006-307172 und JP 2007-169503 beschreiben Zusammensetzungen enthaltend anorganische IR-Absorber und diverse Farbstoffe aus der Gruppe der Anthrachinone, Phthalocyanine oder Perinone, wobei keinerlei Aussage über die Bewitterungsstabilität der Farbstoffe bzw. bestimmter Farbstoffkombinationen gemacht wird.

JP 2008-156386 offenbart Indanthren-Farbmittel in IR-Absorberhaltigen Zusammensetzungen.

US 6476158 beschreibt gedeckte, d.h. nicht transparente Polycarbonat-Polyester Zusammensetzungen, welche eine besonders hohe Witterungsstabilität und Erhalt des Oberflächenglanzes aufweisen. Transparente zusammensetzungen wie in der vorliegenden Erfindung werden jedoch nicht beschrieben.

In keinem der zuvor genannten Dokumente werden Bewitterungseigenschaften der Zusammensetzungen, die erfindungsgemäßen Farbmittelkombinationen, oder die Farb- und IR-Stabilität beschrieben und somit auch keine Lösung für das der vorliegenden Erfindung zugrundeliegende Problem nahegelegt.

Im Stand der Technik sind viele Farbstoffe als besonders Lichtecht und somit auch als stabil beschrieben worden. Die Lichtechtheit (ermittelt bei 1/3 Richttyptiefe mit 1% TiO₂ (PS 2% TiO₂ in Anlehnung an DIN EN ISO 4892-2; transparente Färbungen mit 0,05% Farbstoff; beurteilt nach 8stufigem Blaumaßstab) der sogenannten Macrolex-Farbstoffe (Lanxess Datenblätter; Technische Information, Lanxess Deutschland GmbH, Functional Chemicals, High Performance Additives, Colorants, 51369 Leverkusen, Deutschland) wie z.B. die Farbstoffe Macrolex® Blau RR (Solvent Blue 97), Macrolex® Violett 3R (Solvent Violet 36), die für die Verwendung in Polycarbonat vorgesehen sind, sind mit 7-8 (8 = Höchstwert) eingestuft worden. Dennoch zeigte sich im Rahmen der vorliegenden Versuche, daß formal als lichtecht eingestufte Farbmittel in Polycarbonatzusammensetzungen nicht die erfindungsgemäße Stabilität bei Bewitterung aufweisen.

Allerdings zeigte es sich, dass die oben gestellte Aufgabe mittels dieser Farbmittel nicht lösen lässt bzw. die entsprechende Literatur keine Anleitung zur Auswahl und Kombination dieser Farbmittel mit bestimmten IR-Absorbern zur Lösung der Aufgabe nahelegt, um die geforderten Kennwerte bezüglich Lichttransmission und Gesamtenergietransmission zu erreichen.

Es bestand daher die Aufgabe eine Zusammensetzung auf Basis eines thermoplastischen Materials zur Verfügung zu stellen, welches eine hohe IR-Performance in Kombination mit guten Transmissionseigenschaften im sichtbaren Bereich und einer hohen Farb- und Bewitterungsstabilität aufweist. Insbesondere soll die Zusammensetzung hohe Transmissionswerte im sichtbaren Bereich aufweisen. Diese Kennwerte sollen sich dabei über die Lebensdauer nur geringfügig verändern.

Weiterhin sollte die erfindungsgemäße Zusammensetzung keine oder nur eine geringe Trübung aufweisen.

Ferner war es die Aufgabe der vorliegenden Erfindung, Zusammensetzungen zur Herstellung von Mehrschichtartikeln und Formteilen zur Verfügung zu stellen.

Überraschenderweise konnte die Aufgabe durch Zusammensetzungen gemäß Anspruch 1 der vorliegenden Erfindung, die eine Kombination von speziellen Farbmitteln, optional anorganischen nanoskaligen Pigmenten und speziellen IR-Absorbern enthält.

Die erfindungsgemäße Polymerzusammensetzung enthält die Komponenten:
a) einen im sichtbaren Bereich transparenten thermoplastischen Kunststoff, bevorzugt Polycarbonat, Copolycarbonat, Polyestercarbonat, Polystyrol, Styrol-Copolymere, aromatische Polyester wie Polyethylenterephthalat (PET), PET-Cyclohexandimethanol-Copolymer (PETG), Polyethylennaphthalat (PEN), Polybutylenterephthalat (PBT), cyclisches Polyolefin, Poly- oder Copolyacrylate und Poly- oder Copolymethacrylat wie z.B. Poly- oder Copolymethylmethacrylate (wie PMMA) sowie Copolymere mit Styrol wie z.B. transparentes Polystyrolacrylnitril (PSAN), thermoplastische Polyurethane, Polymere auf Basis von zyklischen Olefinen (z.B. TOPAS®, ein Handelsprodukt der Firma Ticona) weiter bevorzugt Polycarbonat, Copolycarbonat, Polyestercarbonat, aromatische Polyester oder Polymethylmethacrylat, oder Mischungen der genannten Komponenten, und besonders bevorzugt Polycarbonat und Copolycarbonat, wobei der transparente thermoplastische Kunststoff in einer Menge zugegeben wird, daß diese mit den Komponenten b) bis i) 100 Gew.-% ergibt.
b) Lanthanhexaborid und ggf. weitere anorganische IR Absorber aus der Gruppe der Boridverbindungen vom Typ MₓB_{y} (M = Ce, Pr, Nd, Tb, Dy, Ho, Y, Sm, Eu, Er, Tm, Yb, Lu, Sr, Ti, Zr, Hf, V, Ta, Cr, Mo, W und Ca; und x und y einer ganzen Zahl von 1 bis 6), wobei Praseodymiumborid (PrB₆), Neodymiumborid (NdB₆), Ceriumborid (CeB₆), Terbiumborid (TbB₆), Dysprosiumborid (DyB₆), Holmiumborid (HoB₆), Yttriumborid (YB₆), Samariumborid (SmB₆), Europiumborid (EuB₆), Erbiumborid (ErB₆), Thuliumborid (TmB₆), Ytterbiumborid (YbB₆), Lutetiumborid (LuB₆), Strontiumborid (SrB₆), Calciumborid (CaB₆), Titaniumborid (TiB₂), Zirconiumborid (ZrB₂), Hafniumborid (HfB₂), Vanadiumborid (VB₂), Tantalumborid (TaB₂), Chromborid (CrB and CrB₂), Molybdänborid (MoB₂, Mo₂B₅ and MoB), Wolframborid (W₂B₅), oder Kombinationen dieser Boride bevorzugt sind.

Bevorzugt werden die Boride in einer Menge von 0,00150 Gew.-% - 0,01500 Gew.-%, bevorzugt 0,00180 Gew% - 0,01100 Gew.-% und besonders bevorzugt 0,0020 Gew% - 0,00900 Gew.-% berechnet als Feststoffanteil an Borid in der Polymer-Gesamtzusammensetzung eingesetzt. In einer besonderen Ausführungsform, die weitere Farbmittel enthalten kann, werden die Boride in einer Menge von bevorzugt 0,00350 Gew.-% bis 0,00850 Gew% und insbesondere bevorzugt 0,00400 Gew.-% bis 0,00800 Gew.% berechnet als Feststoffanteil an Borid in der Polymer-Gesamtzusammensetzung eingesetzt.

Feststoffanteil an Borid meint in diesem Zusammenhang das Borid als Reinstoff und nicht eine Suspension oder andere Zubereitung, enthaltend den Reinstoff,
und/oder einen anorganischen IR Absorber aus der Gruppe der Wolframverbindungen vom Typ
b1) WyOz (W = Wolfram, O = Sauerstoff; z/y = 2,20 - 2,99) und/oder
b2) MxWyOz (M = H, He, Alkali metall, Erdalkalimetall, Metall aus der Gruppe der Seltenen Erden, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi; x/y = 0,001-1,000; z/y = 2,2-3,0), wobei als M die Elemente H, Cs, Rb, K, Tl, In, Ba, Li, Ca, Sr, Fe und Sn bevorzugt sind, wobei hiervon Cs ganz besonders bevorzugt ist. Besonders bevorzugt sind Ba_{0,33}WO₃, Tl_{0,33}WO₃, K_{0,33}WO₃, Rb_{0,33}WO₃, Cs_{0,33}WO₃, Na_{0,33}WO₃, Na_{0,75}WO₃, sowie deren Gemische. In einer besonderen Ausführungsform der vorliegenden Erfindung ist die alleinige Verwendung von Cs_{0,33}WO₃ als anorganischem IR Absorber ganz besonders bevorzugt. Ebenfalls bevorzugt sind Cs/W-Verhältnisse von 0,20 und 0,25, wobei die vorgenannten Wolframverbindungen vom Typ b1) und b2) nachfolgend als Wolframate bezeichnet werden;

Das IR-absorbierende anorganische Wolframat wird bevorzugt in organischer Matrix dispergiert. Bevorzugt werden die Wolframate in einer Menge von 0,0075 Gew% - 0,0750 Gew.-%, bevorzugt 0,0100 Gew% - 0,0500 Gew.-% und besonders bevorzugt 0,0125 Gew% - 0,0375 Gew.-% berechnet als Feststoffanteil an Wolframat in der Polymer-Gesamtzusammensetzung eingesetzt. Feststoffanteil an Wolframat meint in diesem Zusammenhang das Wolframat als Reinstoff und nicht eine Suspension oder andere Zubereitung, enthaltend den Reinstoff.
c) 0 Gew.-% - 0,00350 Gew.-%, bevorzugt 0 Gew.-% - 0,00135 Gew.-%, weiter bevorzugt 0 Gew.-% - 0,00130 Gew.-%, und besonders bevorzugt 0,00001 Gew.-% bis 0,00128 Gew-% eines anorganischen, nanoskaligen Pigments, vorzugsweise Ruß.

In einer besonderen Ausführungsform, die weitere Farbmittel enthalten kann, wird der Ruß bevorzugt in einer Menge von 0,00040 Gew.-% bis 0,00135 Gew.-% insbesondere bevorzugt in einer Menge von 0,00050 Gew.-% bis 0,00130 Gew.-% eingesetzt,
d) Farbmittel oder Farbmittelkombinationen (Kommata sind als "und" zu lesen):
I. (1a) und/oder (1b), (7)
II. (1a) und/oder (1b), (4), (7)
III. (1a) und/oder (1b), (5), (7)
IV. (3), (4)
V. (3), (5)
VI. (3), (4), (7)
VII. (6), (1a) und/oder (1b), (7)
VIII. (1a) und/oder (1b), (8)
wobei die oben genannten Strukturen wie folgt definiert sind: .
d1) 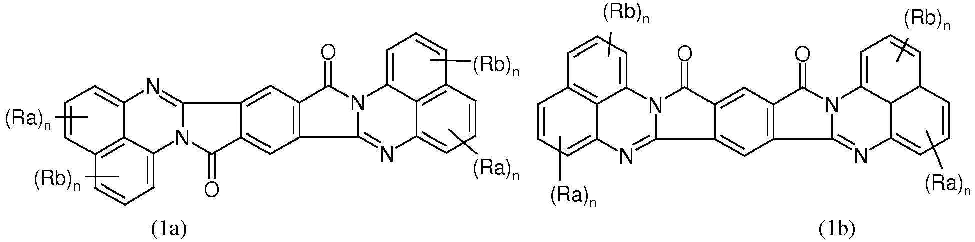 wobei
- Ra und Rb unabhängig voneinander für einen linearen oder verzweigten Alkylrest, oder Halogen steht, bevorzugt für Methyl, Ethyl, Propyl, Isopropyl, Butyl, Isobutyl, tert.-Butyl, Pentyl, Neopentyl, Hexyl, Thexyl, oder Cl, weiter bevorzugt für Methyl, Cl und besonders bevorzugt für Cl steht.
- n steht unabhängig vom jeweiligen R für eine natürliche Zahl zwischen 0 und 3, wobei der Rest für n=0 Wasserstoff ist.

In einer bevorzugten Ausführungsform sind Ra und/oder Rb Cl und stehen in o und/oder p-Positionen zu den Kohlenstoffatomen, welche die Aminfunktionalitäten tragen, wie z.B. diorthochlornapthalino-, di-ortho, mono-para-chlornaphthalino, sowie mono-ortho-naphthalino. Ferner stellen in einer bevorzugten Ausführungsform Ra und Rb jeweils einen tert-butylrest dar, welcher sich bevorzugt in meta Position zu den Kohlenstoffatomen, welche die Stickstofffunktionalitäten tragen, befinden.

In einer besonders bevorzugten Ausführungsform ist in allen Ringen n=0, so daß alle Ra und Rb = H sind.

Die Strukturen (1a) und (1b) verhalten sich isomer zueinander. Die jeweiligen Isomere können für sich allein oder in einem Gemisch eingesetzt werden. In einer besonderen Ausführungsform wird ein 1:1 Isomerengemisch (bezogen auf die jeweilige Menge des Isomers im Isomerengemisch in Gew.-%) von (1a) und (1b) eingesetzt.

Die Herstellung derartiger Farbmittel ist z.B. in DE 2148101 oder WO 2009 074504 A1 beschrieben worden.

Bevorzugt enthält die erfindungsgemäße Zusammensetzung mindestens ein Farbmittel der Strukturen (1a) und (1b).

In einer weiteren Ausführungsform werden die Strukturen (1a) und (1b) als jeweils reine Isomere eingesetzt, wobei die reinen Isomere beispielsweise durch präparative HPLC erhalten werden können. 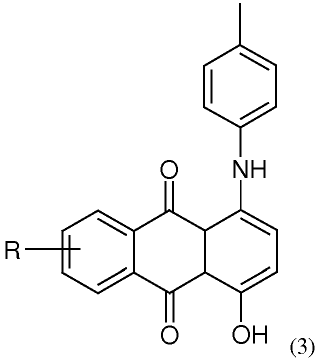 R ist ausgewählt aus der Gruppe, die aus H und p-Methylphenlyamin-Rest besteht; , bevorzugt ist R = H.

Derartige Farbmittel sind z.B. unter dem Handelsnamen Macrolex® Violet B von der Firma Lanxess AG erhältlich. In einer besonderen Ausführungsform wird kein Farbmittel der Struktur (3) eingesetzt.
und
d2) 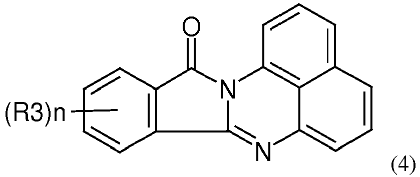 wobei R3 bevorzugt für Halogen, und insbesondere bevorzugt für Cl, steht, wobei besonders bevorzugt n=4 ist. Weiter bevorzugt ist eine Ausführungsform mit n=0, so daß R3 = H sind.

Derartige Farbmittel sind z.B. unter Macrolex® Orange 3G oder Macrolex® Rot EG bei der Firma Lanxess AG erhältlich.

Dabei kann, wenn R3 für Cl steht und n = 4 ist, statt dem Farbmittel der Struktur (4) das Farbmittel mit der Struktur (5) eingesetzt werden, um dieselben Farbeigenschaften zu erzielen:

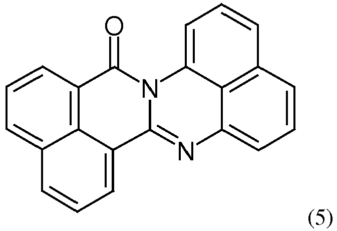

Derartige Farbmittel sind z.B. unter dem Handelsnamen Macrolex® Rot E2G bei der Firma Lanxess AG erhältlich.

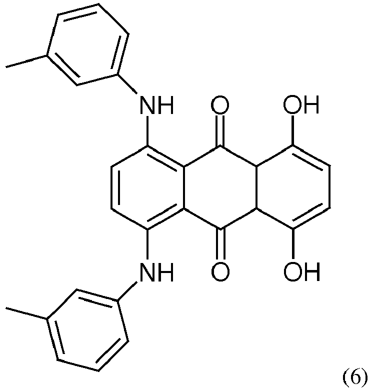

Derartige Farbmittel sind z.B. unter dem Handelsnamen Macrolex® Grün G bei der Firma Lanxess AG erhältlich. 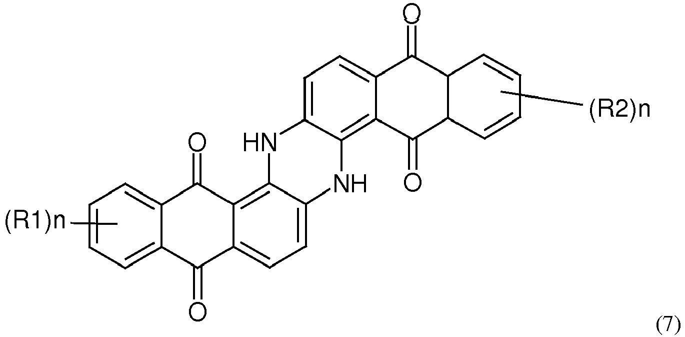 wobei
- R1 und R2 unabhängig voneinander für einen linearen oder verzweigten Alkylrest, oder Halogen steht, bevorzugt für Methyl, Ethyl, Propyl, Isopropyl, Butyl, Isobutyl, tert.-Butyl, Pentyl, Neopentyl, Hexyl, Thexyl, oder Cl, weiter bevorzugt für Methyl, Cl und besonders bevorzugt für Cl steht.
- n steht für eine natürliche Zahl zwischen 0 und 4.

In einer besonders bevorzugten Ausführungsform ist in allen Ringen n=0, so daß alle R1 und R2 = H sind.

Farbmittel dieser Struktur (7) sind kommerziell erhältlich unter der Paliogen Blau Reihe der BASF AG.

Bei Verwendung von Farbmitteln der Struktur (7) sind die Pigmente gemeint, die ein Schüttvolumen (bestimmt nach DIN ISO 787-11) von 2 l/kg - 10 l/kg, bevorzugt 3 l/kg - 8 l/kg, eine spezifische Oberfläche (bestimmt nach DIN 66132) von 5 m²/g - 60 m²/g, bevorzugt 10 m²/g - 55 m²/g, und einen pH-Wert (bestimmt nach DIN ISO 787-9) von 4 - 9 aufweisen.

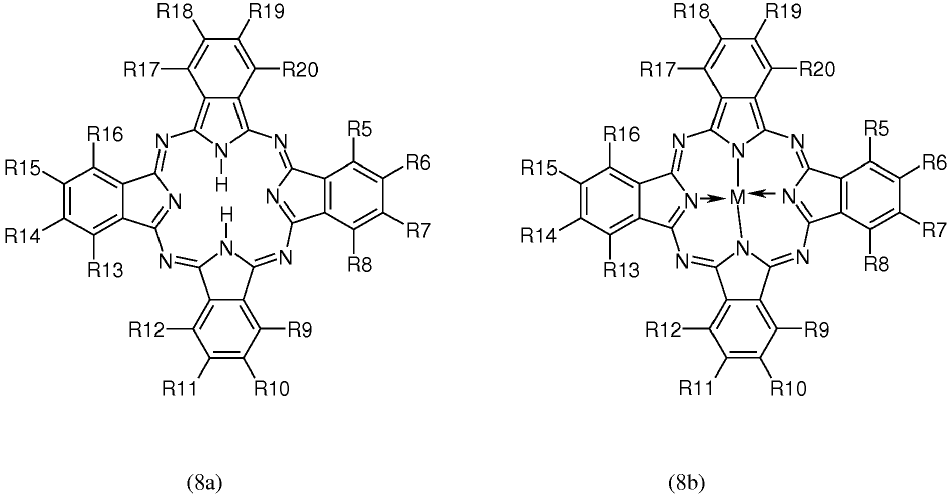

Die Reste R(5-20) sind jeweils unabhängig von einander Wasserstoff, Methyl, Ethyl, Propyl, Isopropyl, Butyl, Isobutyl, tert.-Butyl, Pentyl, Neopentyl, Hexyl, Thexyl, Fluor, Chlor, Brom, Sulfon, CN.

Bevorzugt ist R(5-20) in allen Positionen gleich. Weiter bevorzugt ist R(5-20) in allen Positionen H. In einer alternativen Ausführungsform ist R(5-20) in allen Positionen Cl.

M ist bevorzugt Aluminium (mit R=H: Aluminiumphthalocyanin, CAS: 14154-42-8). Nickel (mit R=H: Nickelphthalocyanin, CAS: 14055-02-8), Cobalt (mit R=H: Kobaltphthalocyanin, CAS: 3317-67-7), Eisen (mit R=H: Eisenphthalocyanin, CAS: 132-16-1), Zink (mit R=H: Zinkphthalocyanin, CAS: 14320-04-08), Kupfer (mit R=H: Kupferphthalocyanin, CAS: 147-14-8; mit R=H und Cl: Polychlorkupferphthalocyanin, CAS: 1328-53-6; mit R=Cl: Hexadecachlorphthalocyanin, CAS: 28888-81-5; mit R=Br: Hexadecabromphthalocyanin, CAS: 28746-04-5), Mangan (mit R=H: Manganphthalocyanin, CAS: 14325-24-7).

Insbesondere bevorzugt ist die Kombination von M = Cu und R = H für alle Positionen. So ist eine Verbindung der Struktur (8b) mit M=Cu und R(5-20)=H als Heliogen® Blau K 6911D oder Heliogen® Blau K 7104 KW von der BASF AG, Ludwigshafen erhältlich.

Verbindungen der Struktur (8a) sind z.B. als Heliogen® Blau L 7460 von der BASF AG, Ludwigshafen, erhältlich.

Von den Strukturen (4), (6), (7) und (8a) bzw. (8b) ist die Verwendung der Strukturen (4), (7) und (8b) insbesondere bevorzugt, wobei wie oben beschrieben, die Struktur (4) durch Struktur (5) unter den beschriebenen Voraussetzungen ersetzt werden kann. Ganz besonders bevorzugt ist die Verwendung von Farbmitteln der Struktur (7). In einer speziellen Ausführungsform der vorliegenden Erfindung ist bezüglich der erfindungsgemäßen organischen Farbmittel die alleinige Verwendung von Farbmitteln der Struktur (7) besonders bevorzugt.

Eine besonders bevorzugte Gruppe von Farbmittelkombinationen enthält keine Farbmittel der Struktur (3).

Während in einer alternativen Ausführungsform Farbmittelkombinationen mit mindestens jeweils einem Farbmittel aus den Gruppen d1) und d2) bevorzugt eingesetzt werden, können abweichend hiervon Farbmittelkombinationen (7), (4) und (7), (5) in einer besonderen Ausführungsform verwendet werden.

Dabei werden in diesen besonders geeigneten Farbmittelkombinationen die unter den Komponenten d1) und d2) als bevorzugt genannten expliziten Farbmittelstrukturen entsprechend bevorzugt eingesetzt.

In einer weiterhin bevorzugten Ausführungsform liegen die Farbmittel der Strukturen d1) zu den Farbmitteln der Strukturen d2) in einem Verhältnis von 1:3 bis 3:1 vor, bevorzugt in einem Verhältnis von 1:2 bis 2:1.

Die als Komponenten d1) und d2) im Rahmen der vorliegenden Erfindung offenbarten organischen Farbmittel können bezogen auf die jeweilige Einzelkomponente in Mengen von 0,000001 Gew.-% bis 1,000000 Gew.-%, bevorzugt von 0,00005 Gew.-% bis 0,50000 Gew.-% und besonders bevorzugt von 0,0001 Gew.-% bis 0,1000 Gew.-% in thermoplastischen Polymer-Zusammensetzungen verwendet werden.

Sollte mehr als ein Farbmittel eingesetzt werden, muss die Auswahl der zusätzlichen Farbmittel derart erfolgen, dass die unten genannten Grenzen bezüglich der Farbveränderung sowie der Veränderung der IR-Leistung nach Bewitterung eingehalten werden.

Die Mengenangaben in Gew.-% beziehen sich hierbei auf eine resultierende Polymer-Zusammensetzung enthaltend die erfindungsgemäßen organischen Farbmittel oder organischen Farbmittelkombinationen.

In einer bevorzugten Ausführungsform bestehen die erfindungsgemäßen Farbmittelzusammensetzungen nur aus Verbindungen der oben genannten Strukturen 1-8.
e) optional 0,0 Gew.-% bis 0,5 Gew.-%, bevorzugt 0,038 Gew.-% bis 0,500 Gew.-%, weiter bevorzugt von 0,050 bis 0,250 Gew.-%, besonders bevorzugt von 0,063 bis 0,150 Gew.-%, bezogen auf das Gesamtgewicht der Zusammensetzung, eines weiteren IR-Absorbers, bevorzugt eines weiteren IR-Absorbers auf ITO- und/oder ATO-Basis, besonders bevorzugt auf ATO-Basis.
f) optional 0,0 Gew.-% bis 1,0 Gew.-%, bevorzugt 0,01 Gew.-% bis 0,50 Gew.-%, besonders bevorzugt 0,01 Gew.-% bis 0,40 Gew.-% ein oder mehrere Entformers,
g) optional 0,0 Gew% bis 20,0 Gew.-%, bevorzugt von 0,05 Gew% bis 10,00 Gew.-%, weiter bevorzugt von 0,10 Gew% bis 1,00 Gew.-%, noch weiter bevorzugt 0,10 Gew.-% bis 0,50 Gew.-% sowie ganz besonders bevorzugt 0,10 Gew.-% bis 0,30 Gew.-% ein oder mehrere UV-Absorbers,
h) optional 0,00 Gew.-%- 0,20 Gew.-%, bevorzugt 0,01 Gew.-% - 0,10 Gew.-%, ein oder mehrere Thermo- bzw. Verarbeitungsstabilisators, bevorzugt ausgewählt aus der Gruppe der Phosphine, Phosphite und phenolische Antioxidantien sowie deren Mischungen. In einer speziellen Ausführungsform der vorliegenden Erfindung werden 0,01 Gew.-% bis 0,05 Gew.-%, bevorzugt 0,015 Gew.-% bis 0,040 Gew.-% an Thermo- bzw. Verarbeitungsstabilisatoren eingesetzt.
i) optional 0,0 Gew.-% bis 5 Gew.-%, bevorzugt 0,01 Gew.-% bis 1,00 Gew.-% ein oder mehrere Additivs,

Die Mengenangaben beziehen sich jeweils auf die gesamte Polymerzusammensetzung.

Gegenstand der Erfindung ist ferner ein Verfahren zur Herstellung der erfindungsgemäßen Zusammensetzungen sowie deren Verwendung und daraus hergestellte Erzeugnisse.

Die erfindungsgemäßen Zusammensetzungen sind bewitterungsstabil wobei die Farbwerte und der direkte solare Transmissionsgrad ("Solar Direct Transmittance") T_{DS} bzw. der Gesamtenergietransmissiongrad ("Solar Total Transmittance") T_{TS} nur geringe Veränderungen aufweisen.

Die Farbveränderung ΔE nach 3000 h künstlicher Bewitterung mit Xenon-Belichtung 0,75 W ist kleiner als 3,5, bevorzugt kleiner als 3,0, insbesondere bevorzugt kleiner als 2,5.

Die Veränderung des direkten solaren Transmissionsgrades ""Solar Direct Transmittance") ΔT_{DS} nach 3000 h künstlicher Bewitterung mit Xenon-Belichtung 0,75 W ist kleiner als 1,0 %, bevorzugt kleiner als 0,9 %, insbesondere bevorzugt kleiner als 0,8 %.

In einer besonderen Ausführungsform sind folgende Vorgaben bezüglich der Farbe an einen transparenten Formkörper bevorzugt aus Polycarbonat, PMMA, PS, bevorzugt PC zu erfüllen:
a* = 0 ± 5 und b* = 0 ± 5, bevorzugt a* = 0 ± 4 und b* = 0 ± 4 und insbesondere bevorzugt a* = 0 ± 2 und b* = 0 ± 2

Der Formkörper ist transparent und hat eine Anfangstrübung von weniger als 3,0 %, bevorzugt 2,5 %, insbesondere bevorzugt weniger als 2,0 %.

Die Lichttransmission (Ty) muss im Bereich von 15 % - 80 % bevorzugt im Bereich von 20 % - 75 % liegen. Damit sind also unter anderem auch Scheiben umfasst, welche die für die Fahrersicht vorgeschriebenen Werte bezüglich der Lichttransmission erreichen müssen.

Der T_{DS}-Wert liegt bevorzugt bei weniger als 70%, insbesondere bevorzugt bei weniger als 60 % und ganz besonders bevorzugt bei weniger als 55 %.

Die Zusammensetzung muss unter den für Thermoplaste üblichen Temperaturen, d.h. bei Temperaturen oberhalb von 300 °C, wie z.B. 350 °C verarbeitbar sein, ohne das sich bei der Verarbeitung die Farbe oder die Leistungsdaten deutlich verändern.

Transparente thermoplastische Kunststoffe im Sinne der Erfindung sind Polycarbonat, Copolycarbonat, Polyestercarbonat, Polystyrol, Styrol-Copolymere, aromatische Polyester wie Polyethylenterephthalat (PET), PET-Cyclohexandimethanol-Copolymer (PETG), Polyethylennaphthalat (PEN), Polybutylenterephthalat (PBT), cyclisches Polyolefin, Poly- oder Copolyacrylate und Poly- oder Copolymethacrylat wie z.B. Poly- oder Copolymethylmethacrylate (wie PMMA) sowie Copolymere mit Styrol wie z.B. transparentes Polystyrolacrylnitril (PSAN), thermoplastische Polyurethane, Polymere auf Basis von zyklischen Olefinen (z.B. TOPAS®, ein Handelsprodukt der Firma Ticona).

Auch Mischungen von mehreren transparenten thermoplastischen Polymeren, sofern sie transparent miteinander mischbar sind, sind möglich, wobei eine Mischung aus Polycarbonat mit PMMA (weiter bevorzugt mit PMMA < 2 Gew.%) oder Polyester bevorzugt ist.

Eine spezielle Ausführungsform enthält in diesem Zusammenhang eine Mischung aus Polycarbonat und PMMA mit weniger als 2,0%, vorzugsweise weniger als 1,0%, weiter bevorzugt weniger als 0,5%, wobei mindestens 0,01 % PMMA enthalten sind bezogen auf die Menge Polycarbonat, wobei das PMMA bevorzugt ein Molgewicht <40.000 g/mol aufweist. In einer besonders bevorzugten Ausführungsform beträgt der Anteil an PMMA 0,2% und besonders bevorzugt 0,1% bezogen auf die Menge Polycarbonat, wobei das PMMA bevorzugt ein Molgewicht <40.000 g/mol aufweist.

Eine weitere spezielle Ausführungsform enthält eine Mischung aus PMMA und Polycarbonat mit weniger als 2%, vorzugsweise weniger als 1%, weiter bevorzugt weniger als 0,5%, noch weiter bevorzugt mit 0,2% und besonders bevorzugt 0,1% Polycarbonat bezogen auf die Menge PMMA.

Besonders bevorzugte Polycarbonate sind das Homopolycarbonat auf Basis von Bisphenol A, das Homopolycarbonat auf Basis von 1,3-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3, 5-trimethylcyclohexan.

Polycarbonate im Sinn der vorliegenden Erfindung sind sowohl Homopolycarbonate als auch Copolycarbonate; die Polycarbonate können in bekannter Weise linear oder verzweigt sein.

Die Herstellung der Polycarbonate erfolgt in bekannter Weise aus Diphenolen, Kohlensäurederivaten, gegebenenfalls Kettenabbrechern und Verzweigern.

Einzelheiten der Herstellung von Polycarbonaten sind in vielen Patentschriften seit etwa 40 Jahren niedergelegt. Beispielhaft sei hier nur auf Schnell, "Chemistry and Physics of Polycarbonates", Polymer Reviews, Volume 9, Interscience Publishers, New York, London, Sydney 1964, auf D. Freitag, U. Grigo, P.R. Müller, H. Nouvertne', BAYER AG, "Polycarbonates" in Encyclopedia of Polymer Science and Engineering, Volume 11, Second Edition, 1988, Seiten 648-718 und schliesslich auf Dres. U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Für die Herstellung der Polycarbonate geeignete Diphenole sind beispielsweise Hydrochinon, Resorcin, Dihydroxydiphenyle, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, alpha - alpha '-Bis-(hydroxyphenyl)-diisopropylbenzole, Phtalimidine abgeleitet von Isatin- oder Phenolphthaleinderivaten sowie deren kernalkylierte und kernhalogenierte Verbindungen.

Bevorzugte Diphenole sind 4,4'-Dihydroxydiphenyl, 2,2-Bis-(4-hydroxyphenyl)-propan, 2,4-Bis-(4-hydroxyphenyl)-2-methylbutan, 1,1-Bis-(4-hdydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-3,3,5-trimethylcyclohexan.

Besonders bevorzugte Diphenole sind 2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan, 1,1-Bis-(4-hydroxyphenyl)-cyclohexan und 1,1-Bis-(4-hydroxyphenyl)-3,3,5-trimethylcyclohexan.

Diese und weitere geeignete Diphenole sind z.B. in US-A 3 028 635, US-A 2 999 825, US-A 3 148 172, US-A 2 991 273, US-A 3 271 367, US-A 4 982 014 und US-A 2 999 846, in DE-A 1 570 703, DE-A 2063 050, DE-A 2 036 052, DE-A 2 211 956 und DE-A 3 832 396, in FR-A 1 561 518, in der Monographie "H. Schnell, Chemistry and Physics of Polycarbonates, Interscience Publishers, New York 1964" sowie in JP-A 62039/1986, JP-A 62040/1986 und JP-A 105550/1986 beschrieben.

Im Fall der Homopolycarbonate ist nur ein Diphenol eingesetzt, im Fall der Copolycarbonate sind mehrere Diphenole eingesetzt.

Geeignete Kohlensäurederivate sind beispielsweise Phosgen oder Diphenylcarbonat.

Geeignete Kettenabbrecher, die bei der Herstellung der Polycarbonate eingesetzt werden können, sind sowohl Monophenole als auch Monocarbonsäuren. Geeignete Monophenole sind Phenol selbst, Alkylphenole wie Kresole, p-tert.-Butylphenol, Cumylphenol, p-n-Octylphenol, p-isoOctylphenol, p-n-Nonylphenol und p-iso-Nonylphenol, Halogenphenole wie p-Chlorphenol, 2,4-Dichlorphenol, p-Bromphenol und 2,4,6-Tribromphenol, 2,4,6-Trijodphenol, p-Jodphenol, sowie deren Mischungen.

Bevorzugte Kettenabbrecher sind Phenol, Cumylphenol und/oder p-tert.-Butylphenol.

Geeignete Monocarbonsäuren sind weiterhin Benzoesäure, Alkylbenzoesäuren und Halogenbenzoesäuren.

Bevorzugte Kettenabbrecher sind ferner die Phenole welche ein oder mehrfach mit C1 bis C30-Alkylresten, linear oder verzweigt, bevorzugt unsubstituiert oder mit tert.-Butyl substituiert sind.

Die Menge an einzusetzendem Kettenabbrecher beträgt bevorzugt 0,1 bis 5 Mol%, bezogen auf Mole an jeweils eingesetzten Diphenolen. Die Zugabe der Kettenabbrecher kann vor, während oder nach der Phosgenierung erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise Phloroglucin, 4,6-Dimethyl-2,4,6-tri-(4-hydroxyphenyl)-hepten-2, 4,6-Dimethyl-2,4,6-tri(4-hydroxyphenyl)-heptan, 1,3,5-Tri(4-hydroxyphenyl)-benzol, 1,1,1 -Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenylisopropyl)-phenol, 2,6-Bis-(2-hydroxy-5'-methyl-benzyl)-4-methylphenol, 2-(4-hydroxyphenyl)-2-(2,4-dihydroxyphenyl)-propan, Hexa-(4(4-hydroxyphenylisopropyl)-phenyl)-orthoterephthalsäureester, Tetra-(4-hydroxyphenyl)-methan, Tetra-(4-(4-hydroxyphenylisopropyl)-phenoxy)-methan und 1,4-Bis-((4',4"-dihydroxytriphenyl)-methyl)-benzol sowie 2,4-Dihydroxybenzoesäure, Trimesinsäure, Cyanurchlorid und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 2,00 Mol%, bezogen wiederum auf Mole an jeweils eingesetzten Diphenolen.

Die Verzweiger können entweder mit den Diphenolen und den Kettenabbrechern in der wässrig alkalischen Phase vorgelegt werden, oder in einem organischen Lösungsmittel gelöst vor der Phosgenierung zugegeben werden. Im Fall des Umesterungsverfahrens werden die Verzweiger zusammen mit den Diphenolen eingesetzt.

Die aromatischen Polycarbonate der vorliegenden Erfindung besitzen Gewichtsmittelmolekulargewichte Mw (ermittelt durch Gelpermeationschromatographie und Eichung mit Polycarbonateichung) zwischen 5000 und 200.000, vorzugsweise zwischen 10.000 und 80.000 und besonders bevorzugt zwischen 15.000 und 40.000

Die erfindungsgemäßen Polymer-Zusammensetzungen können neben den erfindungsgemäßen Komponenten optional noch weitere übliche Polymeradditive enthalten, wie z.B. die in EP-A 0 839 623, WO-A 96/15102, EP-A 0 500 496 oder "Plastics Additives Handbook", Hans Zweifel, 5th Edition 2000, Hanser Verlag, München) beschriebenen Flammschutzmittel, optische Aufheller oder Fließverbesserer in den für die jeweiligen Thermoplasten üblichen Mengen.

Bevorzugt werden die weiteren Polymeradditive in Mengen von 0,0 Gew.-% bis zu 5,0 Gew.-%, weiter bevorzugt 0,01 Gew.-% bis 1,00 Gew.-%, jeweils bezogen auf die Menge der jeweiligen Polymer-Gesamtzusammensetzungen. Auch Mischungen mehrerer Zusatzstoffe sind geeignet.

Die nanoskaligen anorganischen IR-Absorber Partikel auf Boridbasis, welche Gegenstand der vorliegenden Anmeldung sind, sind vorzugsweise ein Metallborid wobei das Metall ausgewählt aus der Gruppe die La, Ce, Pr, Nd, Tb, Dy, Ho, Y, Sm, Eu, ER, Tm, Yb, Lu, Sr, Ti, Zr, Hf, V, Ta, Cr, Mo, W und Ca umfaßt. Die Form des Hexaborids ist besonders bevorzugt. Insbesondere bevorzugt sind Lanthanhexaborid (LaB₆), Praseodymiumborid (PrB₆), Neodymiumborid (NdB₆), Ceriumborid (CeB₆), Terbiumborid (TbB₆), Dysprosiumborid (DyB₆), Holmiumborid (HoB₆), Yttriumborid (YB₆), Samariumborid (SmB₆), Europiumborid (EuB₆), Erbiumborid (ErB₆), Thuliumborid (TmB₆), Ytterbiumborid (YbB₆), Lutetiumborid (LuB₆), Strontiumborid (SrB₆), Calciumborid (CaB₆), Titaniumborid (TiB₂), Zirconiumborid (ZrB₂), Hafniumborid (HfB₂), Vanadiumborid (VB₂), Tantalumborid (TaB₂), Chromborid (CrB and CrB₂), Molybdänborid (MoB₂, Mo₂B₅ and MoB), Wolframborid (W₂B₅), oder Kombinationen dieser Boride. Ganz besonders bevorzugt sind Boride auf Basis von Lanthanhexaborid (LaB₆) oder Mischungen enthaltend Lanthanhexaborid.

Die Oberfläche dieser Partikel ist vorzugsweise unoxidiert; jedoch können oxidierte oder teilweise oxidierte Partikel eingesetzt werden.

In einer besonderen Ausführungsform der vorliegenden Erfindung ist die alleinige Verwendung von Lanthanhexaborid (LaB₆) ganz besonders bevorzugt.

Die Herstellung der Borid-basierten IR-Absorber kann z.B. aus Oxiden der seltenen Erden wie z.B. X₂O₃ (mit X z.B. = La, Ce, Pr, Nd, Gd) und z.B. Borcarbiden (B₄C) erfolgen in dem diese Verbindungen gemischt und im Vakuum bei hohen Temperaturen, wie z.B. 1500 °C für einige Stunden, wie z.B. 3 Stunden, getempert werden. Man erhält das Borid in Form eines Pulvers. Bezüglich der Form der feinteiligen Partikel gibt es keinerlei Beschränkung - so können die Partikel eine spärische, Plättchen-artige, irreguläre oder nadelförmige Form aufweisen. Die Absorptionsfähigkeit von IR-Strahlung ist umso größer, je kristalliner die Boridpartikel sind. Jedoch weisen auch Partikel mit einer niedrigen Kristallinität (z.B. gekennzeichnet durch einen breiten Beugungspeak im Röntgenbeugungsexperiment) eine im Sinne der Erfindung ausreichende IR-Absorptionseigenschaft auf. Dies ist allerdings nur der Fall, solange die Partikel im Inneren eine Bindung aus dem verwendetem Metall und Bor aufweisen. Die Farbe der Partikel im Pulver kann z.B. gräulich-schwarz, bräunlich-schwarz, grünlich-schwarz oder dergleichen sein.

Die Durchschnittsgröße der Partikel (ermittelt durch TEM / Transmissionselektronenmikroskopie) ist bevorzugt kleiner als 200 nm, insbesondere bevorzugt kleiner gleich 150 nm und ganz besonders bevorzugt kleiner als 100 nm, wobei der mittlere Partikeldurchmesser vorzugsweise im Bereich von 1 nm bis 100 nm, weiter bevorzugt im Bereich 2 nm bis 80 nm liegt.

Eingesetzte Wolframate weisen eine amorphe, eine kubische, tetragonale oder hexagonale Wolfram-Bronze Struktur auf. Die Herstellung von dotierten Wolframaten ist in WO2005037932 beschrieben. Insbesondere können auch mit Zinkoxid dotierte Wolframate, wie in den italienischen Patentanmeldungen RM2010A000227 und RM2010A000228 beschrieben, als IR-Absorber eingesetzt werden.

Zur Herstellung derartiger Materialien werden z.B. Wolframtrioxid, Wolframdioxid, ein Hydrat eines Wolframoxids, Wolframhexachlorid, Ammoniumwolframat oder Wolframsäure und gegebenenfalls weitere Salze enthaltend das Element M, wie z.B. Cäsiumcarbonat, in bestimmten stöchiometrischen Verhältnisse gemischt, so dass die molaren Verhältnisse der einzelnen Komponenten durch die Formel MxWyOz wiedergegeben werden. Diese Mischung wird anschließend bei Temperaturen zwischen 100 °C und 850 °C in einer reduzierenden Atmosphäre, z.B. einer Argon-Wasserstoff-Atmosphäre, behandelt und abschließend das erhaltene Pulver bei Temperaturen zwischen 550 °C und 1200 °C unter Inertgasatmosphäre getempert.

Bezüglich der Art der Größenverteilung der Partikel liegen keinerlei Beschränkungen vor. So können auch bi- oder höher-modale Verteilungen vorliegen. Die Partikel sind im sichtbaren Bereich des Spektrums transparent, wobei Transparent bedeutet, dass die Absorption dieser IR-Absorber im sichtbaren Bereich verglichen mit der Absorption im IR-Bereich gering ist und der IR-Absorber zu keiner deutlich erhöhten Trübung der Zusammensetzung oder dem jeweiligen Endprodukt führt. Damit ist gemeint, dass in der Gesamtzusammensetzung der transparenten Formkörper eine Lichtransmission von mindestens 15 % und eine Trübung von weniger als 3 %, bevorzugt weniger als 2,5 %, weiter bevorzugt weniger als 2,0 %, aufweist.

Die Größe der Partikel kann z.B. mit Hilfe der Transmissionselektronenspektroskopie (TEM) bestimmt werden. Derartige Messungen an IR-Absorber-Nanopartikeln sind z.B. in Adachi et al., J. Am. Ceram. Soc. 2008, 91, 2897-2902, beschrieben.

Die Oberfläche der Partikel kann behandelt sein. So kann die Oberfläche mit einem Silan behandelt oder mit einer Titan-basierten, Zirkonium-basierten Schicht oder ähnlichen Schichten versehen sein. Durch diese Behandlung kann die Widerstandsfähigkeit gegen Feuchtigkeit erhöht werden. Diese Art von Beschichtung erhöht die Langzeitstabilität bezüglich der IR-Absorption und ist z.B. in US 2005 0161642 beschrieben.

Neben den Partikeln auf Borid- bzw. Wolframatbasis können - allerdings nicht notwendigerweise - weitere Partikel auf Basis von SiO₂, TiO₂, ZrO₂, Al₂O₃ oder MgO vorliegen. Diese Partikel liegen bevorzugt in einer Größe von kleiner als 200 nm vor.

In der vorliegenden Erfindung werden die feinteiligen IR-Absorber Partikel in Form einer Dispersion in die Polymermatrix eingebracht. Diese Dispersion verhindert die Reaglomeration und erleichtert die Einarbeitung in eine thermoplastische Matrix wie z.B. Polycarbonat. Polymerartige Dispergiermittel werden bevorzugt eingesetzt. Geeignete Polymer-basierte Dispergiermittel sind vor allem Dispergiermittel, die eine hohe Lichttransmission aufweisen, wie z.B. Polyacrylate, Polyether, Polyester oder Polyurethane sowie davon abgeleitete Polymere. Als Dispergiermittel bevorzugt sind Polyacrylate, Polyether und Polyester-basierte Polymere. Bevorzugt werden hochtemperaturstabile Dispergiermittel eingesetzt. In einer bevorzugten Ausführungsform liegt der IR-Absorber in einer Pulverdispersion vor.

Der Anteil des anorganischem IR-Absorber in der Dispersion beträgt vorzugsweise 0,1 Gew.-% bis 50,0 Gew-%, bevorzugt 1,0 Gew.-% - 40,0 Gew-%, und ganz besonders bevorzugt 5,0 Gew-% - 30,0 Gew.-% bezogen auf die Summe der Masse von Dispergiermittel und anorganischem IR-Absorber. Zur Herstellung der erfindungsgemäßen anorganischen IR-Absorber Nanopartikel kann der IR-Absorber mit den unten beschriebenen Dispergiermitteln und weiteren organischen Lösemitteln, wie z.B. Toluol, Benzol oder ähnliche aromatische Kohlenwasserstoffe vermischt und in geeigneten Mühlen, wie z.B. Kugelmühlen, unter Zugabe von Zirkoniumoxid (z.B. mit einem Durchmesser von 0,3 mm) gemahlen werden, um die gewünschte Partikelgrößenverteilung herzustellen. Man erhält die Nanopartikel in Form einer Dispersion. Nach Mahlung können gegebenenfalls weitere Dispergiermittel zugesetzt werden. Das Lösungsmittel wird bei erhöhten Temperaturen und reduziertem Druck entfernt.

Die Herstellung von Dispersionen anorganischer IR-Absorber ist beispielsweise beschrieben in JP2003-277045, DE 10392543 sowie in Adachi et al. , J. Am. Chem. Ceram. Soc 2008, 91 [9], 2897-2902. Lanthanhexaborid in Form der Dispersion, welches geeignet im Sinne der Erfindung ist, ist kommerziell erhältlich von der z.B. bei der Firma Sumitomo Metal Mining Co., Ltd beispielsweise unter dem Handelsnamen KHDS 06.

Caesiumwolframat in Form der Dispersion, welches geeignet im Sinne der Erfindung ist, ist kommerziell erhältlich von der z.B. bei der Firma Sumitomo Metal Mining Co., Ltd beispielsweise unter dem Handelsnamen YMDS 874.

Für die vorliegende Erfindung geeignete Dispergiermittel sind kommerziell erhältlich. Insbesondere sind Dispergiermittel auf Polyacrylatbasis geeignet. Polyacrylate sind z.B. unter den Handelsnamen EFKA®, z.B. EFKA® 4500 und EFKA® 4530 bei Ciba Specialty Chemicals erhältlich. Polyester-basierte Dispergiermittel sind ebenfalls geeignet. Polyesterhaltige Dispergiermittel sind unter den Handelsnamen Solsperse®, z.B. Solsperse® 22000, 24000SC, 26000, 27000 von Avecia erhältlich. Polyurethan-basierte Systeme sind ebenfalls geeignet. Diese sind unter dem Handelsnamen EFKA® 4046, EFKA® 4047 von Ciba Specialty Chemicals erhältlich. Texaphor® P60 und P63 sind entsprechende Handelsnamen der Cognis. Polyetherhaltige Dispergiermittel können ebenfalls zum Einsatz kommen. Diese sind z.B. unter den Handelsnamen Disparlon® DA234 und DA325 der Firma Kusumoto Chemicals bekannt.

Die Dispergiermittel können einzeln oder in Kombinationen verwendet werden. Hinsichtlich der thermischen Beständigkeit sind Dispergiermittel aus der Gruppe der Polyacrylate und der Polyester besonders bevorzugt.

Die IR-absorbierende anorganischen IR-Absorber werden bevorzugt in organischer Matrix dispergiert.

In einer bevorzugten Ausführungsform liegen die anorganischen IR-Absorber in einer gebrauchsfähigen Dispersion aus einem Gemisch von Polymethylmethacrylat und Polyester in einem Festoffgehalt von 5 Gew.-% - 25 Gew.-% vor. Daneben können organische Lösungsmittel wie Toluol und weiter anorganische Partikel wie Zirconiumdioxid vorliegen.

In einer weiteren Ausführungsform können optional neben den erfindungsgemäßen Boriden bzw. Wolframaten als IR-Absorber zusätzlich weitere IR-Absorber verwendet, die vorzugsweise aus der Gruppe der Zinnoxide, weiter bevorzugt Antimon dotiertes Zinnoxid (ATO) oder Indiumzinnoxid (ITO), besonders bevorzugt ATO.

In einer weiteren bevorzugten Ausführungsform weist der/die zusätzliche(n) IR-Absorber ein von dem eingesetzten Borid bzw. Wolframat unterschiedliches Absorptionsspektrum bezogen auf die Absorptionsmaxima auf, so daß ein maximaler Absorptionsbereich durch die Maxima abgedeckt wird.

Die Polymer-Zusammensetzung enthält optional ein anorganisches Pigment, bevorzugt Ruß. Der Ruß liegt bevorzugt fein dispergiert in der organischen Polymermatrix vor und ist bevorzugt nanoskalig. Geeignete Ruße weisen eine durchschnittliche Teilchengröße auf von bevorzugt weniger als 100 Nanometer (nm), weiter bevorzugt weniger als 75 nm , noch weiter bevorzugt weniger als 50 nm und besonders bevorzugt weniger als 40 nm, wobei die durchschnittliche Teilchengröße vorzugsweise größer als 0,5 nm. weiter bevorzugt größer als 1 nm und besonders bevorzugt größer als 5 nm ist.

Im Sinne der Erfindung geeignete Ruße unterscheiden sich von sogenannten Leitrußen dadurch, daß sie nur geringe oder keine elektrische Leitfähigkeit aufweisen. Leitruße weisen im Vergleich zu den hier verwendeten Rußen bestimmte Morphologien und Überstrukturen auf, um eine hohe Leitfähigkeit zu erzielen. Demgegenüber lassen sich die hier verwendeten nanoskaligen Ruße sehr gut in Thermoplasten dispergieren, so dass kaum zusammenhängende Bereiche aus Ruß auftreten, aus denen eine entsprechende Leitfähigkeit resultieren könnte. Kommerziell erhältliche und im Sinne der Erfindung geeignete Ruße sind unter einer Vielzahl von Handelsnamen und Formen, wie Pellets oder Pulver, erhältlich. So sind geeignete Ruße unter den Handelsnamen BLACK PEARLS®, als nass-verarbeitete Pellets unter den Namen ELFTEX®, REGAL® und CSX®, und in einer flockigen Erscheinungsform unter MONARCH®, ELFTEX®, REGAL® und MOGUL® - alle erhältlich von Cabot Corporation.

In einer besonders bevorzugten Ausführungsform weisen die Ruß-Typen Partikelgrößen von 10 nm - 30 nm auf und haben eine Oberfläche von vorzugsweise 35 m² - 138 m² pro g (m²/g). Der Ruß kann behandelt oder unbehandelt sein - so kann der Ruß mit bestimmten Gasen, mit Silica oder organischen Substanzen, wie z.B. Butyllithium behandelt sein. Durch eine derartige Behandlung kann eine Modifizierung oder Funktionlisierung der Oberfläche erreicht werden. Dies kann die Kompatibiliät zur entsprechend eingesetzten Matrix fördern. Insbesondere bevorzugt sind Ruße, die unter dem Handelsnamen BLACK PEARLS® (CAS-Nr. 1333-86-4) gehandelt werden.

Die vorliegend angegebenen Konzentrationen für Ruße und IR-Absorber finden vorzugsweise Anwendung für Fertigteile mit Dicken von 2 mm - 8 mm, bevorzugt 3,5 - 7,0 mm und besonders bevorzugt von 4 mm - 6 mm. Bei niedriger oder höherer Dicke müssen die Konzentrationen entsprechend nach oben bzw. unten angepasst werden, um beispielsweise eine zu starke Trübung oder eine zu geringe Wirkung zu vermeiden.

In einer besonderen Ausführungsform, bei der z.B. eine hohe Verwindungssteifigkeit erforderlich ist - z.B. bei Luft-/Schienenfahrzeugen - können Dicken von 8 mm bis 20 mm erforderlich sein. Die Konzentrationen der IR-Absorber und des anorganischen nanoskaligen Pigments müssen in diesem Fall entsprechend angepasst werden, d.h. die Konzentration nimmt mit zunehmender Schichtdicke ab.

In einer besonderen Ausführungsform enthält die Polymerzusammensetzung Thermostabilisatoren. Insbesonders geeignet sind Phosphite und Phosphonite sowie Phosphine. Beispiele sind Triphenylphosphit, Diphenylalkylphosphit, Phenyldialkylphosphit, Tris(nonylphenyl)phosphit, Trilaurylphosphit, Trioctadecyl phosphit, Distearylpentaerythritoldiphosphit, Tris(2,4-di-tert-butylphenyl)phosphit, Diisodecylpentaerythritoldiphosphit, Bis(2,4-di-tert-butylphenyl)pentaerythritoldiphosphit, Bis(2,4-di- cumylphenyl)pentaerythritol diphosphit, Bis(2,6-di-tert-butyl-4-methylphenyl)pentaerythritoldiphosphit, Diisodecyloxypentaerythritoldiphosphit, Bis(2,4-di-tert-butyl-6-methylphenyl)- pentaerythritoldiphosphit, Bis(2,4,6-tris(tert-butylphenyl)pentaerythritoldiphosphit, Tristea-rylsorbitoltriphosphit, Tetrakis(2,4-di-tert-butylphenyl)-4,4'-biphenylen diphosphonit, 6-Isooctyloxy-2,4,8,10-tetra-tert-butyl-12H-dibenz[d,g]-1,3,2-dioxaphosphocin, Bis(2,4-di-tert-butyl-6-methylphenyl)methylphosphit, Bis(2,4-di-tert-butyl-6-methylphenyl)ethylphosphit, 6-Fluoro-2,4,8,10-tetra-tert-butyl-12-methyl-dibenz[d,g]-1,3,2-dioxaphosphocin, 2,2',2"-Nitrilo-[triethyltris(3,3',5,5'-tetra-tert-butyl-1,1'-biphenyl-2,2'-diyl)phosphit], 2-Ethylhexyl (3,3',5,5'-tetra-tert-butyl-1,1'-biphenyl-2,2'-diyl)phosphit, 5-Butyl-5-ethyl-2-(2,4,6-tri-tert-butylphenoxy)- 1,3,2-dioxaphosphiran, Bis(2,6-di-ter-butyl-4-methylphenyl)pentaerythritol-diphosphit, Triphenylphosphin (TPP), Trialkylphenylphosphin, Bisdiphenylphosphino-ethan oder ein Trinaphthylphosphin. Insbesondere bevorzugt werden Triphenylphosphin (TPP), Irgafos® 168 (Tris(2,4-di-tert-butyl-phenyl)-phosphit) und Tris(no- nylphenyl)phosphit oder deren Mischungen eingesetzt.

Ferner können phenolische Antioxidantien wie alkylierte Monophenole, alkylierte Thioalkylphenole, Hydrochinone und alkylierte Hydrochinone eingesetzt werden. Vorzugsweise werden Irganox® 1010 (Pentaerythrit- 3-(4-hydroxy-3,5-di-tert-butylphenyl)propionat; CAS: 6683-19-8) und Irganox 1076® (2,6-Di-tert-butyl-4-(octadecanoxycarbonylethyl)phenol) eingesetzt..

In einer speziellen Ausführungsform der vorliegenden Erfindung werden die erfindungsgemäßen Phosphinverbindungen gemeinsam mit einem Phosphit oder einem phenolischen Antioxidans oder einer Mischung aus den beiden letztgenannten Verbindungen eingesetzt.

Wird unter Punkt b) als anorganischer IR-Absorber ein Wolframat verwendet, kann sich der Einsatz eines speziellen Stabilisators als nützlich erweisen. In einer besonderen Ausführungsform enthält die Zusammensetzung mindestens einen Stabilisator auf Phosphinbasis, bevorzugt aber eine Mischung aus mindestens einem Stabilisator auf Phosphinbasis, mindestens einem Stabilisator auf Phosphitbasis und mindestens einem Stabilisator aus der Gruppe der phenolischen Antioxidantien.

Phosphine im Sinne der vorliegenden Erfindung leiten sich von Verbindungen des allgemeinen Typs PₙHₙ₊₂, insbesondere von PH₃ ab, wobei bevorzugt alle Wasserstoffatome gegen aliphatische und/oder aromatische Kohlenwasserstoffreste ersetzt sind, wobei die aromatischen Kohlenwasserstoffreste weitere Substituenten wie zum Beispiel Alkylgruppen aufweisen können.. Die Phosphine können hierbei ein Phosphor-Atom aufweisen oder aber mehrere, über entsprechende aliphatische und/oder aromatische Kohlenwasserstoffe verbrückte Phosphor-Atome.

Unter Phosphiten im Sinne der vorliegenden Erfindung sollen Ester der Phosphonsäure (oft auch als Phosphorigsäureester bezeichnet) mit der allgemeinen Strukur P(OR)₃ verstanden sein, wobei R für aliphatische und/oder aromatische Kohlenwasserstoffreste steht, wobei die aromatischen Kohlenwasserstoffreste weitere Substituenten wie zum Beispiel Alkylgruppen aufweisen können.

Unter Phosphonaten sollen von der Grundstuktur R-PO(OH)₂ abgeleitet Verbindungen verstanden sein, wobei R für aliphatische und/oder aromatische Kohlenwasserstoffreste steht, wobei die aromatischen Kohlenwasserstoffreste weitere Substituenten wie zum Beispiel Alkylgruppen aufweisen können.. Die OH-Gruppen der Grundstruktur können teilweise oder vollständig zu OR-Funktionalitäten, wobei R wiederum für aliphatische und/oder aromatische Kohlenwasserstoffreste steht, wobei die aromatischen Kohlenwasserstoffreste weitere Substituenten wie zum Beispiel Alkylgruppen aufweisen können, verestert oder teilweise oder vollständig deprotoniert sein, wobei die negative Gesamtladung durch ein entsprechendes Gegenion ausgeglichen wird.

Unter Phosphoniten im Sinne der vorliegenden Erfindung sollen Ester, insbesondere Diester der Phosphonigen Säure vom Typ R-P(OR)₂ verstanden sein, wobei R für aliphatische und/oder aromatische Kohlenwasserstoffreste steht, wobei die aromatischen Kohlenwasserstoffreste weitere Substituenten wie zum Beispiel Alkylgruppen aufweisen können.. Die Phosphonite können hierbei ein Phosphor-Atom aufweisen oder aber mehrere, über entsprechende aliphatische und/oder aromatische Kohlenwasserstoffe verbrückte Phosphor-Atome.

Im Rahmen der vorliegenden Erfindungen sollen unter Phosphaten Salze, Teil- bzw. Vollester und Kondensate der Phosphorsäure (H₃PO₄) verstanden sein.

Hinsichtlich der Auswahl der Phosphine liegen keine Beschränkungen vor, wobei die Phosphinverbindungen bevorzugt aus der Gruppe ausgewählt sind, die aliphatische Phosphine, aromatische Phosphine und aliphatisch-aromatische Phosphine umfasst.

Die Phosphinverbindungen können primäre, sekundäre und tertiäre Phosphine sein. Bevorzugt werden tertiäre Phosphine eingesetzt, wobei aromatische Phosphine besonders bevorzugt und tertiäre aromatische Phosphine ganz besonders bevorzugt sind.

In einer bevorzugten Ausführungsform der vorliegenden Erfindung werden Triphenylphosphin (TPP), Trialkylphenylphosphin, Bisdiphenylphosphino-ethan oder ein Trinaphthylphosphin, wovon Triphenylphosphin (TPP) ganz besonders bevorzugt ist, oder Mischungen dieser Phosphine eingesetzt.

Grundsätzlich können Mischungen aus verschiedenen Phosphinen eingesetzt werden.

In einer Ausführungsform wird der erfindungemäße IR-Absorber vor der Einarbeitung in die thermoplastische Polymermatrix mit der erfindungsgemäßen Stabilisatorkombination vermischt.

Die Herstellung und Eigenschaften von Phosphinverbindungen sind dem Fachmann bekannt und beispielsweise in der EP-A 0 718 354 und "Ullmanns Enzyklopädie der Technischen Chemie", 4. Aufl., Bd. 18, S. 378-398 und Kirk-Othmer, 3. Aufl., Bd. 17, S. 527-534 beschrieben.

Bei der Einsatzmenge der Phosphinverbindung in der Stabilisatormischung ist zu berücksichtigen, dass unter bestimmten Verarbeitungsbedingungen in Abhängigkeit von Temperatur und Verweilzeit die Substanz oxidiert wird. Der oxidierte Anteil steht nicht mehr zur Stabilisierung der eingesetzten IR-Absorber zur Verfügung. Deshalb sind die Zahl der Verarbeitungsschritte und die jeweiligen Prozessbedingungen zu berücksichtigen. Die Zusammensetzung enthält also nach thermischer Verarbeitung auch immer bestimmte Mengen an oxidiertem Phosphin, insbesondere bevorzugt Triphenylphosphinoxid.

Kommerziell erhältliche geeignete Phosphitstabilisatoren im Rahmen der vorliegenden Erfindung sind beispielsweise Irgafos® 168 (Tris(2,4-di-tert-butyl-phenyl)-phosphit / CAS-Nr. 31570-04-4), Irgafos® TPP (CAS-Nr. 101-02-0) und Irgafos® TNPP (CAS-Nr. 26523-78-4), wobei Irgafos® 168 besonders bevorzugt ist.

Kommerziell erhältliche geeignete phenolische Antioxidantien sind beispielsweise Irganox® 1076 (CAS-Nr. 2082-79-3 / 2,6-Di-tert-butyl-4-(octadecanoxycarbonylethyl)phenol) und Irganox® 1010 (CAS-Nr. 6683-19-8).

In einer bevorzugten Ausführungsform besteht die Stabilisatorkombination aus Triphenylphosphin sowie Irgafos 168® und Irganox 1076®.

Alternativ zu Irganox 1076® kann Irganox® 1010 (Pentaerythrit- 3-(4-hydroxy-3,5-di-tert-butylphenyl)propionat; CAS-Nr.: 6683-19-8) verwendet werden.

Der Anteil der optionalen Stabilisatorkombination bei Verwendung von Wolframaten in der Gesamtzusammensetzung ist 0,001 Gew.% - 0,500 Gew.%, vorzugsweise 0,005 Gew.% - 0,250 Gew.%, weiter bevorzugt 0,01 Gew.% - 0,15 Gew.%, und besonders bevorzugt 0,015 Gew.% - 0,125 Gew.%, bezogen auf das Gesamtgewicht der Zusammensetzung.

In einer bevorzugten Ausführungsform enthält die erfindungsgemäße Polymer-Zusammensetzung weiterhin einen Ultraviolett-Absorber. Zum Einsatz in der erfindungsgemäßen Polymer-Zusammensetzung geeignete Ultraviolett-Absorber sind Verbindungen, die eine möglichst geringe Transmission unterhalb 400 nm und eine möglichst hohe Transmission oberhalb von 400 nm besitzen. Derartige Verbindungen und deren Herstellung sind literaturbekannt und sind beispielsweise in den EP-A 0 839 623, WO-A 96/15102 und EP-A 0 500 496 beschrieben. Für den Einsatz in der erfindungsgemäßen Zusammensetzung besonders geeignete Ultraviolett-Absorber sind Benzotriazole, Triazine, Benzophenone und/oder arylierte Cyanoacrylate.

Besonders geeignete Ultraviolett-Absorber sind Hydroxy-Benzotriazole, wie 2-(3',5'-Bis-(1,1-dimethylbenzyl)-2'-hydroxy-phenyl)-benzotriazol (Tinuvin® 234, Ciba Spezialitätenchemie, Basel), 2-(2'-Hydroxy-5'-(tert.-octyl)-phenyl)-benzotriazol (Tinuvin® 329, Ciba Spezialitätenchemie, Basel), 2-(2'-Hydroxy-3'-(2-butyl)-5'-(tert.butyl)-phenyl)-benzotriazol (Tinuvin® 350, Ciba Spezialitätenchemie, Basel), Bis-(3-(2H-benztriazolyl)-2-hydroxy-5-tert.-octyl)methan, (Tinuvin® 360, Ciba Spezialitätenchemie, Basel), (2-(4,6-diphenyl-1,3,5-triazin-2-yl)-5-(hexyloxy)-phenol (Tinuvin® 1577, Ciba Spezialitätenchemie, Basel), sowie der Benzophenone 2,4-Dihydroxybenzophenon (Chimasorb® 22 , Ciba Spezialitätenchemie, Basel) und 2-Hydroxy-4-(octyloxy)-benzophenon (Chimassorb® 81, Ciba, Basel), 2-Propenoic acid, 2-cyano-3,3-diphenyl-, 2,2-bis[[(2-cyano-1-oxo-3,3-diphenyl-2-propenyl)oxy]-methyl]-1,3-propanediyl ester (9CI) (Uvinul® 3030, BASF AG Ludwigshafen), 2-[2-hydroxy-4-(2-ethylhexyl)oxy]phenyl-4,6-di(4-phenyl)phenyl-1,3,5-triazine (CGX UVA 006, Ciba Spezialitätenchemie, Basel) oder Tetra-ethyl-2,2'-(1,4-phenylene-dimethylidene)-bismalonate (Hostavin® B-Cap, Clariant AG).

Es können auch Mischungen dieser Ultraviolett-Absorber eingesetzt werden.

Hinsichtlich der Menge des in der Zusammensetzung enthaltenen Ultraviolett-Absorbers liegen keine besonderen Beschränkungen vor, solange die gewünschte Absorption von UV-Strahlung sowie eine ausreichende Transparenz des aus der Zusammensetzung hergestellten Formkörpers gewährleistet sind.

Die erfindungsgemäßen Polymerzusammensetzungen können optional Entformungsmittel enthalten Besonders geeignete Entformungsmittel für die erfindungsgemäße Zusammensetzung sind Pentaerythrittetrastearat (PETS) oder Glycerinmonostearat (GMS).

Methoden zur Herstellung der erfindungsgemäßen Polymer-Zusammensetzungen sind dem Fachmann bekannt.

Die Herstellung der erfindungsgemäßen Polymer-Zusammensetzungen enthaltend die Komponenten a) bis i) erfolgt mit gängigen Einarbeitungsverfahren durch Zusammenführung, Vermischen und Homogenisieren der einzelnen Bestandteile, wobei insbesondere die Homogenisierung bevorzugt in der Schmelze unter Einwirkung von Scherkräften stattfindet. Gegebenenfalls erfolgt das Zusammenführen und Vermischen vor der Schmelzehomogenisierung unter Verwendung von Pulvervormischungen.

Es können auch Vormischungen verwendet werden, die aus Lösungen der Mischungskomponenten in geeigneten Lösungsmitteln, wobei gegebenenfalls in Lösung homogenisiert wird und das Lösungsmittel anschließend entfernt wird, hergestellt worden sind.

Insbesondere können hierbei die Komponenten der erfindungsgemäßen Zusammensetzung durch bekannte Verfahren oder als Masterbatch eingebracht werden.

Die Verwendung von Masterbatchen sowie von Pulvermischungen oder kompaktierten Vormischungen ist insbesondere zum Einbringen der Komponenten b) bis einschließlich i) geeignet.

Besonders bevorzugt erfolgt die Einarbeitung der Komponenten b), c), und d) in Form einer Pulvermischung, wobei die Pulvermischung zusätzlich pulverförmige Komponente a) enthält, oder in Form einer kompaktierten Mischung der Komponenten b), c), und d), ggf. zusätzlich enthaltend Komponente a), oder als Masterbatch der Komponenten a), b), c), und d).

In einer besonderen Ausführungsform können die oben genannten Komponenten zu einem Masterbatch vermischt werden, wobei die Vermischung bevorzugt in der Schmelze unter Einwirkung von Scherkräften (zum Beispiel in einem Kneter oder Zweischneckenextruder) stattfindet. Dieses Verfahren bietet den Vorteil, daß die Komponenten besser in der Polymermatrix verteilt werden. Zur Herstellung des Masterbatches wird als Polymermatrix bevorzugt der thermoplastische Kunststoff gewählt, der auch die Hauptkomponente der letztlichen Polymer-Gesamtzusammensetzung darstellt.

In diesem Zusammenhang kann die Zusammensetzung in üblichen Vorrichtungen wie Schneckenextrudern (zum Beispiel Zweischneckenextruder, ZSK), Knetern, Brabender- oder Banbury-Mühlen zusammengeführt, vermischt, homogenisiert und anschließend extrudiert werden. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden.

Die erfindungsgemäßen Polymer-Zusammensetzungen können zu Erzeugnissen oder Formkörpern verarbeitet werden, in dem man beispielsweise die Polymer-Zusammensetzungen zunächst wie beschrieben zu Granulat extrudiert und dieses Granulat durch geeignete Verfahren zu verschiedenen Erzeugnissen oder Formkörpern in bekannter Weise verarbeitet.

Die erfindungsgemäßen Zusammensetzungen können in diesem Zusammenhang beispielsweise durch Heißpressen, Spinnen, Blasformen, Tiefziehen, Extrudieren oder Spritzgiessen in Erzeugnisse oder Formkörper, geformte Gegenstände wie Spielzeugteile, Fasern, Folien, Bändchen, Platten wie Massivplatten, Stegplatten, Doppelstegplatten oder Wellplatten, Gefäße, Rohre oder sonstige Profile, überführt werden. Von Interesse ist auch die Verwendung von Mehrschichtsystemen. Das Aufbringen kann zugleich oder unmittelbar nach der Formgebung des Grundkörpers geschehen, z.B. durch Coextrusion oder Mehrkomponentenspritzguss. Das Aufbringen kann aber auch auf den fertig geformten Grundkörper geschehen, z.B. durch Lamination mit einem Film oder durch Beschichtung mit einer Lösung.

Platten aus Basis- und optionaler Deckschicht / optionalen Deckschichten (Mehrschichtsysteme) können durch (Co)extrusion, Direct Skinning, Direct Coating, Insert Moulding, Folienhinterspritzen, oder sonstige dem Fachmann bekannte geeignete Verfahren hergestellt werden.

Zur Extrusion wird die gegebenenfalls z.B. mittels Trocknung vorbehandelte Polymer-Zusammensetzung dem Extruder zugeführt und im Plastifizierungssystem des Extruders aufgeschmolzen. Die Kunststoffschmelze wird dann durch eine Breitschlitzdüse oder eine Stegplattendüse gedrückt und dabei verformt, im Walzenspalt eines Glättkalanders in die gewünschte endgültige Form gebracht und durch wechselseitige Kühlung auf Glättwalzen und der Umgebungsluft formfixiert. Es werden die zur Extrusion der Polymer-Zusammensetzung notwendigen Temperaturen eingestellt, wobei üblicherweise den Herstellerangaben gefolgt werden kann. Enthalten die Polymerzusammensetzungen beispielsweise Polycarbonate mit hoher Schmelzeviskosität, so werden diese normalerweise bei Schmelzetemperaturen von 260 °C bis 350 °C verarbeitet, entsprechend werden die Zylindertemperaturen des Plastifizierzylinders sowie die Düsentemperaturen eingestellt.

Durch Einsatz von einem oder mehreren Seitenextrudern und einer Mehrkanal-Düse oder gegebenenfalls geeigneten Schmelzeadaptern vor einer Breitschlitzdüse lassen sich thermoplastische Schmelzen verschiedener Zusammensetzung übereinander legen und somit mehrschichtige Platten oder Folien erzeugen (für die Coextrusion siehe beispielsweise EP-A 0 110 221, EP-A 0 110 238 und EP-A 0 716 919, für Details des Adapter- und Düsenverfahrens siehe Johannaber/Ast:"Kunststoff- Maschinenführer", Hanser Verlag, 2000 und in Gesellschaft Kunststofftechnik: "Coextrudierte Folien und Platten: Zukunftsperspektiven, Anforderungen, Anlagen und Herstellung, Qualitätssicherung", VDI-Verlag, 1990).

Mit den oben beschriebenen thermoplastischen Substraten lassen sich Formkörper auch durch Spritzguss herstellen. Die Verfahren hierzu sind bekannt und im "Handbuch Spritzgiessen", Friedrich Johannnaber/Walter Michaeli, München; Wien: Hanser, 2001, ISBN 3-446-15632-1 oder "Anleitung zum Bau von Spritzgiesswerkzeugen", Menges/Michaeli/Mohren, München; Wien: Hanser, 1999, ISBN 3-446-21258-2 beschrieben.

Spritzgiessen ist ein Umformverfahren, welches in der Kunststoffverarbeitung eingesetzt wird.

Mit diesem Verfahren lassen sich wirtschaftlich direkt verwendbare Formteile in grosser Stückzahl herstellen. Dazu wird mit einer Spritzgiessmaschine der jeweilige Werkstoff, beziehungsweise die Formmasse, in einer Spritzeinheit plastifiziert und in ein Spritzgiesswerkzeug eingespritzt. Der Hohlraum, die Kavität, des Werkzeugs bestimmt die Form und die Oberflächenstruktur des fertigen Bauteils.

Spritzguss umfasst hier alle Spritzgiessverfahren einschliesslich Mehrkomponentenspritzguss und Spritzprägeverfahren.

Zur Herstellung von Kunststoffformteilen werden die in der Kunststoffverarbeitung bekannten Spritzguss- und Spritzprägevarianten eingesetzt. Herkömmliche Spritzgussverfahren ohne Spritzprägetechnik werden insbesondere für die Herstellung von kleineren Spritzgiessteilen verwendet, bei welchen kurze Fliesswege auftreten und mit moderaten Spritzdrücken gearbeitet werden kann. Beim herkömmlichen Spritzgussverfahren wird die Kunststoffmasse in eine zwischen zwei geschlossenen lagefesten Formplatten ausgebildete Kavität eingespritzt und verfestigt sich dort.

Spritzprägeverfahren unterscheiden sich von herkömmlichen Spritzgussverfahren dadurch, dass der Einspritz- und/oder Verfestigungsvorgang unter Ausführung einer Formplattenbewegung durchgeführt wird. Beim bekannten Spritzprägeverfahren sind die Formplatten vor dem Einspritzvorgang bereits etwas geöffnet, um die bei der späteren Verfestigung auftretende Schwindung auszugleichen und den benötigten Spritzdruck zu reduzieren. Schon zu Beginn des Einspritzvorganges ist daher eine vorvergrösserte Kavität vorhanden. Tauchkanten des Werkzeuges garantieren auch bei etwas geöffneten Formplatten noch eine ausreichende Dichtigkeit der vorvergrösserten Kavität. Die Kunststoffmasse wird in diese vorvergrösserte Kavität eingespritzt und währenddessen bzw. anschliessend unter Ausführung einer Werkzeugbewegung in Schliessrichtung verpresst. Insbesondere bei der Herstellung von grossflächigen und dünnwandigen Formteilen mit langen Fliesswegen ist die aufwändigere Spritzprägetechnik bevorzugt oder ggf. zwingend erforderlich. Nur auf diese Weise wird eine Reduzierung der bei grossen Formteilen benötigten Spritzdrücke erreicht. Ferner können Spannungen bzw. Verzug im Spritzgiessteil, welche infolge hoher Spritzdrücke auftreten, durch Spritzprägen vermieden werden. Dies ist besonders bei der Herstellung von optischen Kunststoffanwendungen, wie beispielsweise Verscheibung (Fenster) in Kraftfahrzeugen, wichtig, da bei optischen Kunststoffanwendungen erhöhte Anforderungen an die Spannungsfreiheit einzuhalten sind.

Erfindungsgemäß bevorzugte Erzeugnisse, Formkörper oder geformte Gegenstände sind Platten, Folien, Rohre, Verscheibungen, beispielsweise Autofenster, Fenster von Schienen- und Luftfahrzeugen, Autosonnendächer, Sicherheitsscheiben, Bedachungen oder Gebäudeverglasungen, Lampenabdeckungen für den Innenraumbereich von Fahrzeugen und Gebäuden, Lampenabdeckungen für den Außenbereich wie z.B. Abdeckungen von Straßenlaternen, Visiere, Brillen, Extrusions- und Lösungsfolien für Displays oder Elektromotoren, auch Skifolien, Ampelgehäuse, Ampelabdeckunge, Ampellinsen, die die erfindungsgemäßen Zusammensetzungen enthalten. Dabei können neben Massivplatten auch Doppelstegplatten oder Multistegplatten verwendet werden. Als weitere Komponenten der erfindungsgemäßen Erzeugnisse neben den erfindungsgemäßen Zusammensetzungen können beispielsweise weitere Werkstoffteile in den erfindungsgemäßen Erzeugnissen enthalten sein. Beispielsweise können Verscheibungen Dichtungsmaterialen am Rand der Verscheibungen aufweisen. Bedachungen können beispielsweise Metallkomponenten wie Schrauben, Metallstifte oder ähnliches aufweisen, die zur Befestigung oder Führung (bei Falt- oder Schiebedächern) der Bedachungselemente dienen können. Ferner können weitere Materialien mit den erfindungsgemäßen Zusammensetzungen verbunden werden, z.B. im 2-Komponenten-Spritzguss. So kann das entsprechende Bauteil mit IR-absorbierenden Eigenschaften mit einem Rand versehen werden, welcher z.B. dem Verkleben dient.

In einer besonderen Ausführungsform werden die Artikel aus der Zusammensetzung der vorliegenden Erfindung beschichtet. Diese Beschichtung dient dem Schutz des thermoplastischen Materials gegenüber allgemeinen Witterungseinflüssen (z.B. Schädigung durch Sonnenlicht) sowie gegenüber mechanischer Beeinträchtigung der Oberfläche (z.B. Verkratzen) und erhöht somit die Beständigkeit der entsprechend ausgerüsteten Artikel.

Es ist bekannt, dass Polycarbonat gegenüber UV-Strahlung mittels verschiedener Beschichtungen geschützt werden kann. Üblicherweise enthalten diese Beschichtungen UV-Absorber. Diese Schichten erhöhen ebenso die Kratzfestigkeit des entsprechenden Artikels. Die Artikel aus der vorliegenden Erfindung können Einschicht oder Mehrschichtsysteme tragen. Sie können ein- oder beidseitig beschichtet sein. In einer bevorzugten Ausführungsform enthält der Artikel einen Kratzfestlack enthaltend UV-Absorber. In einer besonderen Ausführungsform enthält das Mehrschichterzeugnis mindestens eine Schicht enthaltend die erfindungsgemäße Zusammensetzung, mindestens eine UV-Schutzschicht und optional eine Kratzfestbeschichtung.

Bei Verscheibungsmaterialien trägt der Artikel mindestens eine Kratzfest- bzw. Antireflexbeschichtung auf mindestens einer Seite.

Die Herstellung der Beschichtung, z.B. einer Anti-Reflexbeschichtung, kann über verschiedene Methoden erfolgen. Beispielsweise kann über verschiedene Methoden des Aufdampfens, z.B. über Elektronenstrahlverfahren, Widerstandserhitzung sowie über Plasmaabscheidung oder verschiedener Sputtermethoden wie Hochfrequenz-Sputtern, Magnetron-Sputtern, Ionenstrahl-Sputtern usw., Ionenplattieren mittels DC-, RF-, HCD-Methoden, Reaktiv-Ionenplattieren usw. oder chemischer Gasphasenabscheidung eine Beschichtung erfolgen. Ferner kann eine Antireflexbeschichtung auch aus Lösung aufgebracht werden. So kann über eine Dispersion eines Metalloxids mit hohen Brechungsindex wie ZrO₂, TiO₂ Sb₂O₅ oder WO₃ in einen Silicon-basierten Lack eine entsprechende Beschichtungslösung hergestellt werden, welche zur Beschichtung von Kunstoffartikeln geeignet ist und thermisch oder UV-gestützt ausgehärtet werden kann.

Es sind verschiedene Methoden bekannt, um eine Kratzfestbeschichtung auf Kunststoffartikeln herzustellen. Beispielsweise können Epoxy-, Acryl-, Polysiloxan-, kolloidales Kieselgel-, oder anorganisch/organisch (Hybridsysteme) basierte Lacke verwendet werden. Diese Systeme können über beispielsweise über Tauchverfahren, Spincoating, Sprühverfahren, oder Fließbeschichtung aufgebracht werden. Die Aushärtung kann thermisch oder mittels UV-Bestrahlung erfolgen. Es können Ein- oder Mehrschichtsysteme verwendet werden. Die Kratzfestbeschichtung kann z.B. direkt oder nach Vorbereitung der Substratoberfläche mit einer Grundierung (Primer) aufgetragen werden. Ferner kann eine Kratzfestbeschichtung über Plasma-gestützte Polymerisationsverfahren aufgebracht werden, z.B. über ein SiO₂-Plasma. Antibeschlags- oder Antireflex-Beschichtungen können ebenfalls über Plasmaverfahren hergestellt werden. Weiterhin ist es möglich, über bestimmte Spritzgussverfahren, wie z.B. das Hinterspritzen von oberflächenbehandelten Folien, eine Kratzfestbeschichtung auf den resultierenden Formkörper aufzubringen. In der Kratzfestschicht können verschiedene Additive, wie z.B. UV-Absorber, abgeleitet z.B. von Triazolen oder Triazinen, vorhanden sein. Ferner können IR-Absorber organischer oder anorganischer Natur enthalten sein. Diese Additive können im Kratzfestlack selbst oder in der Primerschicht enthalten sein. Die Dicke der Kratzfestschicht beträgt 1 - 20 µm, bevorzugt 2 - 15 µm Unterhalb von 1 µm ist die Beständigkeit der Kratzfestschicht ungenügend. Oberhalb von 20 µm treten häufiger Risse im Lack auf. Das erfindungsgemäße Basismaterial, welches in der vorliegenden Erfindung beschrieben wird, wird bevorzugt nach Fertigstellung des Spritzgussartikels mit einer oben beschriebenen Kratzfest- und/oder Antireflexschicht versehen, da der bevorzugte Einsatzbereich im Bereich von Fenster- oder- Automobilverscheibung liegt.

Für Polycarbonate wird bevorzugt ein UV-Absorber enthaltener Primer eingesetzt, um die Haftung des Kratzfestlackes zu verbessern. Der Primer kann weitere Stabilisatoren wie z.B. HALS-Systeme (Stabilisatoren auf Basis sterisch gehinderter Amine), Haftvermittler, Fließhilfsmittel enthalten. Das jeweilige Harz kann aus einer Vielzahl von Materialien ausgewählt werden und ist z.B. in Ullmann's Encylopedia of Industrial Chemistry, 5th Edition, Vol. A18, pp. 368-426, VCH, Weinheim 1991 beschrieben. Es können Polyacrylate, Polyurethane, Phenol-basierte, Melaminbasierte, Epoxy- und Alkyd-Systeme oder Mischungen dieser Systeme eingesetzt werden. Das Harz wird meist in geeigneten Lösemitteln gelöst - häufig in Alkoholen. Abhängig vom gewählten Harz kann die Aushärtung bei Raumtemperatur oder bei erhöhten Temperaturen erfolgen. Bevorzugt werden Temperaturen zwischen 50 °C und 130 °C eingesetzt - häufig nach dem ein Großteil des Lösemittels kurzzeitig bei Raumtemperatur entfernt wurde. Kommerziell erhältliche Systeme sind z.B. SHP470, SHP470FT und SHP401 der Firma Momentive Performance Materials.

Derartige Beschichtungen sind z.B. in US 6350512 B1, US 5869185, EP 1308084, WO 2006/108520 beschrieben.

Kratzfest-Lacke (Hard-Coat) sind bevorzugt aus Siloxanen aufgebaut und enthalten bevorzugt UV-.Absorber. Sie werden bevorzugt über Tauch- oder Fließverfahren aufgebracht. Die Aushärtung erfolgt bei Temperaturen von 50 °C - 130 °C. Kommerziell erhältliche Systeme sind z.B. AS4000, SHC5020 und AS4700 von Momentive Performance Materials. Derartige Systeme sind z.B. in US 5041313, DE 3121385, US 5391795, WO 2008/109072 beschrieben. Die Synthese dieser Materialien erfolgt meist über Kondensation von Alkoxy- und/oder Alkylakoxysilanen unter Säure- oder Basenkatalyse. Optional können Nanopartikel eingearbeitet werden. Bevorzugte Lösemittel sind Alkohole wie Butanol, Isopropanol, Methanol, Ethanol und deren Mischungen.

Anstatt von Primer / Kratzfestbeschichtungs-Kombinationen können Einkomponenten-Hybrid- Systeme eingesetzt werden Diese sind z.B. in EP0570165 oder WO 2008/071363 oder DE 2804283 beschrieben. Kommerziell erhältlich Hybrid-Systeme sind z.B. unter den Namen PHC587 oder UVHC 3000 von Momentive Performance Materials erhältlich.

In einem besonders bevorzugtem Verfahren erfolgt die Applikation des Lackes über das Flutverfahren, da es zu beschichteten Teilen mit hoher optischer Qualität führt.

Das Flutverfahren kann manuell mit Schlauch oder geeignetem Beschichtungskopf oder automatisch im Durchlauf über Flutlackierroboter- und gegebenenfalls Schlitzdüsen erfolgen

Hierbei könne die Bauteile, sowohl hängend als auch in einem entsprechenden Warenträger gelagert, beschichtet werden.

Bei größeren und/oder 3D-Bauteilen wird das zu beschichtende Teil in einen geeigneten Warenträger eingehangen oder aufgesetzt.

Bei Kleinteilen kann die Beschichtung auch per Hand durchgeführt werden. Hierbei wird die zuschichtende flüssige Primer- oder Lacklösung ausgehend von der oberen Kante des Kleinteiles in Längsrichtung über die Platte gegossen, während gleichzeitig der Ansatzpunkt des Lackes auf der Platte von links nach rechts über die Plattenbreite geführt wird. Die lackierten Platten werden senkrecht an einer Klammer hängend nach den jeweiligen Herstellervorgaben abgelüftet und gehärtet.

Die erfindungsgemäßen Infrarotstrahlung-(IR)-absorbierenden Polymer-Zusammensetzungen lassen sich besonders bevorzugt in Scheiben-Modulen für Automobile, Schienen- und Luftfahrzeuge einsetzen. Bevorzugt sind hierbei Scheiben-Module enthaltend: eine Basisschicht enthaltend die erfindungsgemäßen Infrarotstrahlung-(IR)-absorbierenden Polymer-Zusammensetzungen, ein auf die Basisschicht aufgebrachtes Rahmenelement sowie eine kautschukartige Pufferschicht, welche auf das Rahmenelement aufgebracht ist.

Die Basisschicht kann hierbei mit einem Lacksystem zum Beispiel zur Erhöhung der Kratzfestigkeit versehen sein. Ferner kann es von Vorteil sein, zur Haftvermittlung zwischen Rahmenelement und kautschukartiger Pufferschicht das Rahmenelement mit einem Primer zu versehen, bevor die Pufferschicht aufgebracht wird.

Zum Vermeiden von Bauteilspannungen ist darauf zu achten, daß die thermischen Ausdehnungskoeffizienten von Basisschicht und Rahmenelement durch eine geeignete Materialauswahl aufeinander abgestimmt sind. Hierbei hat es sich als vorteilhaft herausgestellt, für das Rahmenelement ein Material zu wählen, dessen linearer thermischer Ausdehnungkoeffizient in Längsrichtung (d.h. vom Anguß betrachtet in Richtung des Schmelzflusses, nachfolgend als RS abgekürzt) um 1x10⁻⁵ bis 3x10⁻⁵ (mm/mm K) niedriger ist, als der des Materials der Basisschicht. Zudem sollte das RS/QS-Verhältnis des linearen thermischen Ausdehnungskoeffizienten des jeweiligen Materials im Bereich von 0,6 bis 1,0 liegen, wobei QS die Querrichtung, d. h. die Richtung orthogonal zur vom Anguß betrachteten Richtung des Schmelzflusses meint.

Als Material für das Rahmenelement sind Blends aus Polycarbonat und Polyestern bevorzugt. Bei den Polyestern sind Polyalkylenterephthalate bevorzut. Von den Polyalkylenterephthalaten sind wiederum Polybutylenterephthalat (PBT) und Polyethylenterephthalat (PET) bevorzugt, wobei PET besonders bevorzugt ist. Zur Einstellung des linearen thermischen Ausdehnungskoeffizienten enthält das Material für das Rahmenelement Füll- und Verstärkungsstoffe, wobei die Füll- und Verstärkungsstoffe unter anderem faser-, plättchen-, röhren-, stäbchen- oder kugelförmig bzw. sphärisch oder partikulär sein können. Zu den geeigneten Füll- und Verstärkungsstoffen zählen beispielsweise Talkum, Wollastonit, Glimmer, Kaolin, Kieselgur, Calciumsulfat, Calciumcarbonat, Bariumsulfat, Glasfasern, Glas- oder Keramikkugeln, Glashohlkugeln oder Keramikhohlkugeln, Glas- oder Mineralwolle, Kohlefasern oder Carbon-Nanotubes.

Als Material für die kautschukartige Pufferschicht eigenen sich beispielsweise Einkomponenten- oder Zweikomponenten-Polyurethanklebstoffe. Geeignete Materialien und an diese gestellte Anforderungen sind beipielsweise beschrieben in "Finite Elemente Berechnungen von Structural Glazing Elementen im Bauwesen und geklebten Frontscheiben im Automobilbau" (Böger/Schmöller, 2003) oder in der EP 0 481 319 A2 sowie hierin zitierter Literatur.

### Beispiele

Im Folgenden wird die Erfindung anhand von Ausführungsbeispielen näher beschrieben, wobei die hier beschriebenen Bestimmungsmethoden für alle korrespondierenden Größen in der vorliegenden Erfindung zur Anwendung kommen, sofern nichts Gegenteiliges beschrieben worden ist.

Die Bestimmung des Schmelzvolumenrate (MVR) erfolgt nach ISO 1133 (bei 300 °C; 1,2 kg).

Die Bestimmung der Farbe in Transmission erfolgt mit einem Lambda 900 Spektralphotometer der Firma Perkin Elmer mit Photometerkugel in Anlehnung an ASTM E1348 mit den in der ASTM E308 beschriebenen Gewichtungsfaktoren und Formeln.

Die Berechnung der CIELAB Farbkoordinaten L*, a*, b* erfolgt für Lichtart D 65 und 10° Normalbeobachter.

### Lichttransmission (Ty):

Die Transmissionsmessungen wurden an einem Lambda 900 Spektralphotometer der Firma Perkin Elmer mit Photometerkugel nach ISO 13468-2 durchgeführt (d.h. Bestimmung der Gesamttransmission durch Messung der diffusen Transmission und direkten Transmission).

### Bestimmung des T_{DS}-Wertes (Solar Direct Transmittance:

Die Transmissions- und Reflexionsmessungen wurden an einem Lambda 900 Spektralphotometer der Firma Perkin Elmer mit Photometerkugel durchgeführt. Alle Werte wurden bei Wellenlängen von 320 nm bis einschließlich 2300 nm mit Δλ 5nm bestimmt.

Die Berechnung der "Solar Direct Transmittance" T_{DS} wurde nach ISO 13837, computational convention "A" durchgeführt.

### Farbveränderung:

ΔE ist ein errechneter Wert für den empfundenen Farbabstand nach ASTM D 2244. Bei den vorliegenden Versuchen wurde Lichtart D 65/10° verwendet. Für die Berechnung des ΔE-Wertes wurde die Formel 7 in der ASTM D 2244 herangezogen.

### Trübung:

Die Trübung wurde bestimmt nach ASTM D 1003 mit einem BYK Gardner Haze Gard.

### Visuelle Inspektion:

Bei der visuellen Inspektion werden die Prüfkörper auf Farbstippen geprüft. Die Prüfung wird an optischen Musterplatten mit einer Dicke von 4 mm vorgenommen. Sind mit bloßem Auge Farbstippen oder Farbschlieren erkennbar so ist die Beurteilung "schlecht". Sind keine Farbstippen oder Farbschlieren erkennbar, so ist die Beurteilung "gut".

### Bewitterung:

Die künstliche Bewitterung mit Xenon-Belichtung wird nach Norm ASTM G 155 in einem Xenon-Weatherometer CI 5000 der Firma Atlas durchgeführt. Als UV-Filter wurden zwei Borosilikatfilter verwendet. Die Einstrahlungsstärke beträgt 0.75 W/m²/nm bei 340 nm. Die Schwarzstandardtemperatur beträgt 80°C, die Probenraumtemperatur 40°C. Die Proben werden alle 120 min für 18 min beregnet, wobei die Belichtung auch während der Beregnungsphase eingeschaltet bleibt. Das vorgenannte Bewitterungsverfahren wird im folgenden Xe-Wom 0.75W genannt.

### Partikelgrößenbestimmung:

Die Bestimmung der Partikelgröße erfolgte mittels Transmissionselektronenmikroskopie an einem Mikroskop mit der Typenbezeichnung EM 208 der Firma FEI Company (5651 GG Eindhoven, Niederlande). Dazu wurde der IR-Absorber mittels eines Achatmörsers aufgerieben und danach mittels Ultraschall in Ethanol auf einem Kupferträgernetz (für Transmissionselektronenspektroskopie) präpariert. Es wurde Aufnahmen in einer 310000-fachen Vergrößerung angefertigt. Die Partikelgröße wurde mittels bildanalytischer Meßmethoden im Hellfeldkontrast (Auswertung der Partikelgröße über Grauwertkontrast) bestimmt.

### Materialien zur Herstellung der Probekörper:

### Komponente a)

- Lineares Bisphenol-A-Polycarbonat mit Endgruppen basierend auf Phenol mit einer Schmelze-Volumenrate (MVR) von 6 cm³/10 min, gemessen bei 300 °C und 1,2 kg Belastung gemäß ISO 1033), nachfolgend als PC 1 bezeichnet.
- Lineares Bisphenol-A-Polycarbonat mit Endgruppen basierend auf Phenol mit einem MVR von 12,5 cm³/10 min, gemessen bei 300 °C und 1,2 kg Belastung gemäß ISO 1033), nachfolgend als PC 2 bezeichnet.

PC 2 enthält noch eine Additivmischung bestehend aus Entformungsmittel, Thermostabilisator und UV-Stabilisator. Als Entformungsmittel wird Pentaerythrittetrastearat (CAS 115-83-3), als Thermostabilisator Triphenylphosphin (CAS 603-35-0) und als UV-Stabilisator Tinuvin® 329 (CAS 3147-75-9) eingesetz.

### Komponente b)

- Lanthanhexaborid, LaB6 (KHDS 872G2 der Firma Sumitomo Metal Mining, Japan, CAS-No. 949005-03-2). Das Produkt liegt in Form einer pulverförmigen Dispersion vor. Die Gewichtsangaben in den Beispielen beziehen sich auf das Produkt KHDS 872G2, wobei der Feststoffgehalt an Lanthanhexaborid in der eingesetzten kommerziellen KHDS 872G2 Dispersion 10,0 Gew.-% beträgt.
- Als IR-Absorber wird Cäsiumwolframat, Cs_{0,33}WO₃, (YMDS 874 der Firma Sumitomo Metal Mining, Japan, Cas.Nr. 1258269-41-8) eingesetzt. Das Produkt liegt in Form einer Dispersion vor. Die Gewichtsangaben in den Beispielen beziehen sich auf das Cäsiumwolframat als Reinstoff, wobei der Feststoffgehalt an Cäsiumwolframat in der eingesetzten kommerziellen YMDS 874-Dispersion 20 Gew% beträgt. Das vorliegend Wolframat ist nicht Zink-stabilisiert.

### Komponente c)

- Als nanoskaliger Ruß (Partikelgröße ca . 17 nm) werden Black Pearls® 800 der Firma Cabot Corp. eingesetzt (CAS-No. 1333-86-4).

### Komponente d)

- Als Farbmittel der Formel (1a, 1b) wird das Produkt aus A. (siehe unten) verwendet.
- Als Farbmittel der Struktur (4) wird Macrolex Rot EG (Solvent Red 135) von der Firma Lanxess AG, Leverkusen, verwendet.
- Als Farbmittel der Struktur (7) Paliogen Blau L 6385 (Pigment Blue 60) von der BASF SE, 67065 Ludwigshafen,, verwendet. Dieses Farbmittel weist ein Schüttvolumen von 7 l/kg, einen pH-Wert von 6 - 9 und eine spezifische Oberfläche von 40 m2/g auf.
- Als Farbmittel der Struktur (8b) wird Heliogen Blau K 6911D der Firma BASF SE, 67065 Ludwigshafen, Deutschland verwendet.

### Farbmittel für Vergleichsbeispiele

Als weiteres nicht erfindungsgemäßes Farbmittel wird Macrolex Blau RR (Color Index: Solvent Blue 97; CAS: 32724-62-2) der Firma Lanxess Deutschland GmbH eingesetzt.

Als weiteres nicht erfindungsgemäßes Farbmittel wird Macrolex Violett 3R Gran. (Color Index: Solvent Violet 36; CAS: 61951-89-1) der Firma Lanxess Deutschland GmbH eingesetzt.

Als weiteres nicht erfindungsgemäßes Farbmittel, welches die Stuktur (7) aufweist, wird Paliogen Blau L 6360 von der BASF SE, 67065 Ludwigshafen" verwendet. Dieses Farbmittel weist ein Schüttvolumen von 1,7 l/kg, einen pH-Wert von 4 - 7 und eine spezifische Oberfläche von 2 m²/g auf.

### Herstellung der Polymerzusammensetzungen durch Compoundierung:

Die Compoundierung der Additive erfolgte auf einem Zweiwellenextruder der Firma KraussMaffei Berstorff, TYP ZE25, bei einer Gehäusetemperatur von 260°C bzw. einer Massetemperatur von 270°C und einer Drehzahl von 100 Upm bei einem Durchsatz von 10kg/h mit der in den Beispielen angegebenen Mengen an Komponenten. Hierbei wird zunächst zur besseren Vermischung eine Pulvermischung aus PC 1 (10 Gew.-% Pulvermischung bezogen auf die Gesamtzusammensetzung) enthaltend die unten angegebenen weiteren Komponenten angefertigt. Diese Pulvermischung wird bei der Compoundierung zu PC 2 zudosiert.

### Herstellung der Prüfkörper:

Das Granulat wird bei 120 °C für 3 Stunden im Vakuum getrocknet und anschließend auf einer Spritzgussmaschine vom Typ Arburg 370 mit einer 25-Spritzeinheit bei einer Massetemperatur von 300°C und einer Werkzeugtemperatur von 90 °C zu Farbmusterplatten mit den Abmessungen 60 mm x 40 mm x Z mm) verarbeitet; Z ist dabei 3,2 , 4,0 bzw 5,0 mm.

### Herstellung von Substanzen der Komponente d)

Unter anderem wurden in den erfindungsgemäßen Beispielen Strukturen der Formel (1a) und(1b)eingesetzt. Die Herstellung dieser Farbstoffe erfolgte in Anlehnung an DE 2148101 wie folgt:

### A. Herstellung eines 1:1 Gemisches (Gew.-%) von (1a) und (1b):

5,62g (0,025mol) Benzol-1,2,4,5-tetracarbonsäuredianhydrid und 7,99g (0,05mol) 1,8-Diaminonaphthalin werden in 75ml n- Ethylpyrrolidon bei Raumtemperatur vorlegt und langsam auf 150 °C erhitzt. Bei dieser Temperatur wird für 5 Stunden gerührt. Nach Abkühlen werden 125ml Wasser zugegeben und der ausgefallene Niederschlag abfiltriert. Der Niederschlag wird noch mehrmals in Wasser aufgeschlämmt und auf diese Art gewaschen. Der Niederschlag wird im Hochvakuum bei 80°C getrocknet. Der getrocknete Niederschlag wird mit einer Mischung aus 50ml Eisessig und 25ml Acetanhydrid versetzt. Das Gemisch wird für 4 Stunden unter Rückfluss gekocht. Nach Abkühlen wird das Reaktionsgemisch in 500ml Wasser gegeben. Der Niederschlag wird abfiltriert, mit Wasser gewaschen und im Hochvakuum bei 80 °C getrocknet. Man erhält 12,5g lila-farbendes Pulver.

### Lackierung der Prüfkörper:

Als Primer wird das Produkt SHP470FT (Momentive Performance Materials Inc. Wilton, CT USA) verwendet. Als Schutzlack wird das Produkt AS 4700 (Momentive Performance Materials Inc. Wilton, CT USA) verwendet.

Die Beschichtung erfolgte in einem klimakontrollierten Beschichtungsraum unter den jeweiligen Vorgaben des Lackherstellers bei 23 bis 25°C und 40 bis 48% rel. Feuchte.

Die Prüfkörper wurden mit sogenannten Iso-Tüchern (LymSat® der Firma LymTech Scientific; gesättigt mit 70% Isopropanol und 30% deionisiertem Wasser) gereinigt, mit Isopropanol abgespült, 30 min an Luft getrocknet und mit ionisierter Luft abgeblasen.

Die Beschichtung der Probekörper erfolgt per Hand nach dem Flutverfahren. Hierbei wird die Primerlösung ausgehend von der oberen Kante des Kleinteiles in Längsrichtung über die Platte gegossen, während gleichzeitig der Ansatzpunkt des Primers auf der Platte von links nach rechts über die Plattenbreite geführt wird. Die geprimerte Platte wurde senkrecht an einer Klammer hängend nach den jeweiligen Herstellervorgaben bis zur Staubtrockene abgelüftet und im Umluftofen gehärtet (30 Minuten bei Raumtemperatur abgelüftet und 30 Minuten bei 125 °C gehärtet). Nach dem Abkühlen auf Raumtemperatur erfolgte die Beschichtung der geprimerten Fläche mit AS 4700. Nach der Ablüftung bis zur Staubtrockene erfolgte die Härtung 60 min bei 130°C im Umluftofen.

Die Primerschichtdicke und die Dicke des Topcoats können die Bewitterungseigenschaften beeinflussen.

Um eine ausreichende und vergleichbare Schutzwirkung gegen Bewitterung zu erreichen soll die Primerschichtdicke für die nachfolgenden Beispiele im Bereich 1,2 - 4,0 µm und die Dicke des Topcoats zwischen 4,0 und 8,0 µm liegen.

### Beispiele mit einer Lichttransmission von ca. 70 %

### Beispiel 1 (Erfindungsgemäßes Beispiel)

Es wird eine Polymerzusammensetzung enthaltend die Mengen der folgenden Komponenten durch Compoundierung hergestellt. Die in den nachfolgenden Beispielen angegebenen Mengenangaben in Gew.-% beziehen sich in allen Fällen auf die Polymergesamtzusammensetzung. Die auf 100 Gew.-% fehlende Menge ist jeweils Polycarbonat.

| | |
|---|---|
| Farbmittel A (Komponente d)): | 0,000260 Gew.-% |
| Paliogen Blau L 6385 (Komponente d)): | 0,000150 Gew.-% |
| Triphenylphosphin (Komponente h)): | 0,100000 Gew.-% |
| Lanthanhexaborid (Komponente b)): | 0,022000 Gew.-% |
| PC 1 (Komponente a)): | 9,877590 Gew.-% |
| PC2 (Komponente a)): | 90,000000 Gew.-% |

PC 2 enthält dabei die oben unter PC 2 aufgeführten Additive. PC 2 enthält dabei 0,270 Gew.-% Entformungsmittel, 0,025 Gew.-% Thermostabilisator und 0,200 Gew.-% UV-Stabilisator jeweils bezogen auf die Menge an eingesetztem PC 2.

### Beispiel 2 (Vergleichsbeispiel)

Es wird eine Polymerzusammensetzung enthaltend die Mengen der folgenden Komponenten wie oben beschrieben (Bsp. 1) hergestellt:

| | |
|---|---|
| Farbmittel A (Komponente d)): | 0,000245 Gew.-% |
| Paliogen Blau L 6360 (Farbmittel für Vergleichsbeispiele): | 0,000140 Gew.-% |
| Triphenylphosphin (Komponente h)): | 0,10000 Gew.-% |
| Lanthanhexaborid (Komponente b)): | 0,02100 Gew.-% |
| PC 1 (Komponente a)): | 9,878615 Gew.-% |
| PC 2 (Komponente a)): | 90,000000 Gew.-% |

PC 2 enthält dabei die oben unter PC 2 aufgeführten Additive. PC 2 enthält dabei 0,270 Gew.-% Entformungsmittel, 0,025 Gew.-% Thermostabilisator und 0,200 Gew.-% UV-Stabilisator jeweils bezogen auf die Menge an eingesetztem PC 2.

### Beispiel 3 (Vergleichsbeispiel)

Es wird eine Polymerzusammensetzung enthaltend die Mengen der folgenden Komponenten wie oben beschrieben (Bsp. 1) hergestellt:

| | |
|---|---|
| Macrolex Violet 3R (Farbmittel für Vergleichsbeispiele): | 0,000360 Gew.-% |
| Macrolex Blau RR (Farbmittel für Vergleichsbeispiele): | 0,000020 Gew.-% |
| Triphenylphosphin (Komponente h)): | 0,100000 Gew.-% |
| Lanthanhexaborid (Komponente b)): | 0,024500 Gew.-% |
| PC 1 (Komponente a)): | 9,875120 Gew.-% |
| PC 2 (Komponente a)): | 90,000000 Gew.-% |

PC 2 enthält dabei die oben unter PC 2 aufgeführten Additive. PC 2 enthält dabei 0,270 Gew.-% Entformungsmittel, 0,025 Gew.-% Thermostabilisator und 0,200 Gew.-% UV-Stabilisator jeweils bezogen auf die Menge an eingesetztem PC 2.

### Beispiele mit einer Lichttransmission von ca. 20 %

### Beispiel 4 (Erfindungsgemäßes Beispiel)

Es wird eine Polymerzusammensetzung enthaltend die Mengen der folgenden Komponenten wie oben beschrieben (Bsp. 1) hergestellt:

| | |
|---|---|
| Farbmittel A (Komponente d)): | 0,001200 Gew.-% |
| Paliogen Blau L 6385 (Komponente d)): | 0,001500 Gew.-% |
| Triphenylphosphin (Komponente h)): | 0,100000 Gew.-% |
| Lanthanhexaborid (Komponente b)): | 0,051000 Gew.-% |
| BlackPearls 800 (Komponente c)): | 0,001200 Gew.-% |
| PC 1 (Komponente a)): | 9,845100 Gew.-% |
| PC 2 (Komponente a)): | 90,000000 Gew.-% |

PC 2 enthält dabei die oben unter PC 2 aufgeführten Additive. PC 2 enthält dabei 0,270 Gew.-% Entformungsmittel, 0,025 Gew.-% Thermostabilisator und 0,200 Gew.-% UV-Stabilisator jeweils bezogen auf die Menge an eingesetztem PC 2.

### Beispiel 5 (Erfindungsgemäßes Beispiel)

Es wird eine Polymerzusammensetzung enthaltend die Mengen der folgenden Komponenten wie oben beschrieben (Bsp. 1) hergestellt:

| | |
|---|---|
| Farbmittel A (Komponente d)): | 0,001300 Gew.-% |
| Heliogen Blau K6911 D (Komponente d)): | 0,000900 Gew.-% |
| Triphenylphosphin (Komponente h)): | 0,100000 Gew.-% |
| Lanthanhexaborid (Komponente b)): | 0,053000 Gew.-% |
| BlackPearls 800 (Komponente c)): | 0,001290 Gew.-% |
| PC 1 (Komponente a)): | 9,843510 Gew.-% |
| PC 2 (Komponente a)): | 90,000000 Gew.-% |

PC 2 enthält dabei die oben unter PC 2 aufgeführten Additive. PC 2 enthält dabei 0,270 Gew.-% Entformungsmittel, 0,025 Gew.-% Thermostabilisator und 0,200 Gew.-% UV-Stabilisator jeweils bezogen auf die Menge an eingesetztem PC 2.

### Beispiel 6 (Vergleichsbeispiel)

Es wird eine Polymerzusammensetzung enthaltend die Mengen der folgenden Komponenten wie oben beschrieben (Bsp. 1) hergestellt:

| | |
|---|---|
| Macrolex Violett 3R (Farbmittel für Vergleichsbeispiele): | 0,001560 Gew.-% |
| Paliogen Blau L 6385 (Komponente d)): | 0,001000 Gew.-% |
| Triphenylphosphin (Komponente h)): | 0,100000 Gew.-% |
| Lanthanhexaborid (Komponente b)): | 0,048700 Gew.-% |
| BlackPearls 800 (Komponente c)): | 0,001370 Gew.-% |
| PC 1 (Komponente a)): | 9,847370 Gew.-% |
| PC 2 (Komponente a)): | 90,000000 Gew.-% |

PC 2 enthält dabei die oben unter PC 2 aufgeführten Additive. PC 2 enthält dabei 0,270 Gew.-% Entformungsmittel, 0,025 Gew.-% Thermostabilisator und 0,200 Gew.-% UV-Stabilisator jeweils bezogen auf die Menge an eingesetztem PC 2.

### Beispiel 7 (Vergleichsbeispiel)

Es wird eine Polymerzusammensetzung enthaltend die Mengen der folgenden Komponenten wie oben beschrieben (Bsp. 1) hergestellt:

| | |
|---|---|
| Farbmittel A (Komponente d)): | 0,000590 Gew.-% |
| Macrolex Blau RR (Farbmittel für Vergleichsversuche): | 0,001470 Gew.-% |
| Triphenylphosphin (Komponente h)): | 0,100000 Gew.-% |
| Lanthanhexaborid (Komponente b)): | 0,049000 Gew.-% |
| BlackPearls 800 (Komponente c)): | 0,001470 Gew.-% |
| PC 1(Komponente a)): | 9,847470 Gew.-% |
| PC 2 (Komponente a)): | 90,000000 Gew.-% |

PC 2 enthält dabei die oben unter PC 2 aufgeführten Additive. PC 2 enthält dabei 0,270 Gew.-% Entformungsmittel, 0,025 Gew.-% Thermostabilisator und 0,200 Gew.-% UV-Stabilisator jeweils bezogen auf die Menge an eingesetztem PC 2.

### Beispiel 8 (Vergleichsbeispiel)

Es wird eine Polymerzusammensetzung enthaltend die Mengen der folgenden Komponenten wie oben beschrieben (Bsp. 1) hergestellt:

| | |
|---|---|
| Farbmittel A (Komponente d)): | 0,000720 Gew.-% |
| Paliogen Blau L 6385 (Komponente d)): | 0,001500 Gew.-% |
| Triphenylphosphin (Komponente h)): | 0,100000 Gew.-% |
| Cäsiumwolframat (Komponente b)): | 0,021800 Gew.-% |
| BlackPearls 800 (Komponente c)): | 0,001770 Gew.-% |
| PC l(Komponente a)): | 9,874210 Gew.-% |
| PC 2 (Komponente a)): | 90,000000 Gew.-% |

PC 2 enthält dabei die oben unter PC 2 aufgeführten Additive. PC 2 enthält dabei 0,270 Gew.-% Entformungsmittel, 0,025 Gew.-% Thermostabilisator und 0,200 Gew.-% UV-Stabilisator jeweils bezogen auf die Menge an eingesetztem PC 2.

**Tabelle 1: Ausgangsdaten; unbewittert; Beispiele mit einer Lichttransmission von ca. 70 %**

| Beispiel | Dicke der Platte [mm] | Primer/ TopCoat [µm] | Ty % | T_{DS} % | a* | b* | L* | Visuelle Inspektion |
|---|---|---|---|---|---|---|---|---|
| 1 (Erfindungsgem.) | 4,0 | 1,8 / 5,5 | 71,13 | 52,76 | -0,93 | 2,26 | 87,55 | ok |
| 2 (Vergleich) | 4,0 | 1,8 / 5,5 | 72,25 | 54,10 | -0,81 | 2,44 | 88,09 | Farbstippe n |
| 3 (Vergleich) | 4,0 | 1,7 / 5,0 | 71,77 | 53,28 | -1,06 | 2,20 | 87,86 | ok |

**Tabelle 2: ΔE, ΔT_{DS}, nach Bewitterung ; Beispiele mit einer Lichttransmission von ca. 70 %**

| Bsp | ΔE 1000h | ΔE 2000h | ΔE 3000h | ΔTds 1000h | ΔTds 2000h | ΔTds 3000h |
|---|---|---|---|---|---|---|
| 1 (Erfindungsgem.) | 0,64 | 0,57 | 0,58 | 0,78 | 1,07 | 1,26 |
| 2 (Vergleich) | 0,71 | 0,60 | 0,54 | 0,75 | 1,00 | 1,16 |
| 3 (Vergleich) | 0,45 | 0,93 | 1,40 | 0,82 | 1,18 | 1,30 |

**Tabelle 3: Ausgangsdaten; unbewittert; Beispiele mit einer Lichttransmission von ca. 20 %**

| Beispiel | Dicke [mm] | TopCoat [µm] | Ty % | T_{DS} % | a* | b* | L* | Visuelle Inspektion |
|---|---|---|---|---|---|---|---|---|
| 4 (Erfindungsgem.) | 4,0 | 1,8 / 5,5 | 21,15 | 16,82 | -0,42 | 0,97 | 53,12 | ok |
| 5 (Erfindungsgem.) | 4,0 | 1,8 / 5,6 | 18,90 | 15,31 | -2,58 | 1,87 | 50,57 | ok |
| 6 (Vergleich) | 4,0 | 1,7 / 5,2 | 19,86 | 16,16 | -1,45 | 0,88 | 51,86 | ok |
| 7 (Vergleich) | 4,0 | 1,8 / 5,6 | 19,40 | 16,82 | -3,28 | 2,99 | 51,68 | ok |
| 8 (Vergleich) | 4,0 | 1,6 / 5,7 | 20,37 | 20,80 | -1,22 | 0,41 | 52,25 | ok |

**Tabelle 4: ΔE, ΔT_{DS}, nach Bewitterung ; Beispiele mit einer Lichttransmission von ca. 20%**

| Bsp | ΔE 1000h | ΔE 2000h | ΔE 3000h | ΔTds 1000h | ΔTds 2000h | ΔTds 3000h |
|---|---|---|---|---|---|---|
| 4 (Erfindungsgem.) | 0,71 | 1,11 | 1,61 | 0,53 | 0,77 | 1,03 |
| 5 (Erfindungsgem.) | 0,76 | 1,05 | 1,45 | 0,61 | 0,86 | 1,07 |
| 6 (Vergleich) | 1,33 | 2,61 | 3,73 | 0,63 | 1,01 | 1,34 |
| 7 (Vergleich) | 1,38 | 2,54 | 3,59 | 0,64 | 1,00 | 1,28 |
| 8 (Vergleich) | 1,04 | 1,54 | 2,13 | 3,59 | 4,80 | 5,44 |

Wie man aus Tabelle 2 erkennt, ist die Farbstabilität bei Verwendung einer nicht erfindungsgemäßen Farbmittelkombination (Beispiel 3) schlechter verglichen mit dem erfindungsgemäßen Beispiel 1.

Das nicht erfindungsgemäße Beispiel 2 weist Farbstippen infolge einer unzureichend Dispergierung des Farbmittels auf, was zeigt, daß auch bei identischen Farbmittelkombinationen die Schüttdichte und spezifische Oberfläche des Farbmittels eine entscheidende Rolle spielen.

Wie die erfindungsgemäßen Beispiele 4 und 5 in Tabelle 4 zeigen, weisen nur diese Farbmittelkombinationen eine hohe Farbstabilität in Verbindung mit einer hohen IR-Stabilität auf (vgl. Vergleichsbeispiele 6 und 7 mit unzureichender Farbstabilität und Vergleichsbeispiel 8 mit unzureichender IR-Stabilität).

## Patentansprüche

1. Polymer-Zusammensetzung enthaltend
a. mindestens einen im sichtbaren Bereich transparenten thermoplastischen Kunststoff;
b. mindestens Lanthanhexaborid und ggf. weitere anorganische IR-Absorber aus der Gruppe, die Boridverbindungen und Wolframate sowie deren Mischungen umfasst,
c. optional ein anorganisches, nanoskaliges Pigment,
d. eine Farbmittelkombination der Strukturen ausgewählt aus:
I. (1a) und/oder (1b), (7),
II. (1a) und/oder (1b), (4), (7),
III. (1a) und/oder (1b), (5), (7),
IV. (3), (4),
V. (3), (5),
VI. (3), (4), (7),
VII. (6), (1a) und/oder (1b), (7),
VIII. (1a) und/oder (1b), (8),
wobei die Strukturen wie folgt sind:
1a, 1b: 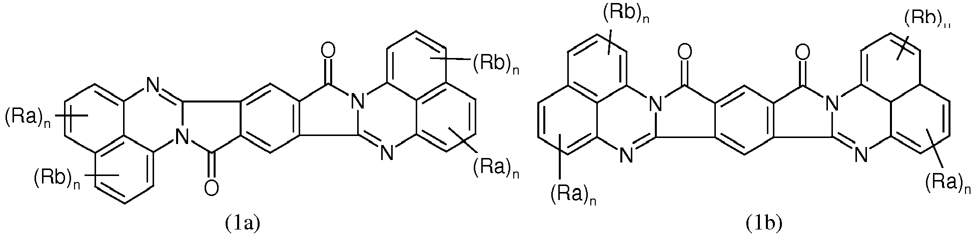 wobei
- Ra und Rb unabhängig voneinander für einen linearen oder verzweigten Alkylrest oder Halogen steht;
- n steht unabhängig vom jeweiligen R für eine natürliche Zahl zwischen 0 und 3, wobei der Rest für n=0 Wasserstoff ist;
3: 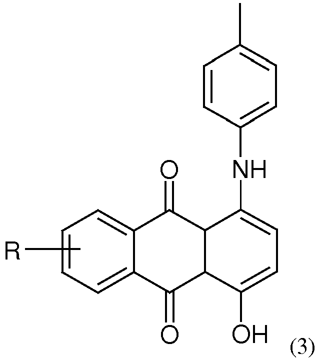 wobei
R ausgewählt ist aus der Gruppe, die aus H und p-Methylphenlyamin-Rest besteht;
4: 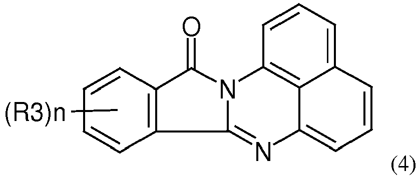 wobei
R3 Halogen ist;
n=4 ist;.
5: 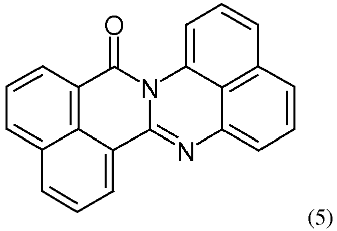
6: 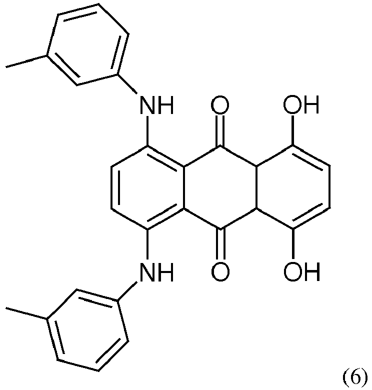
7: 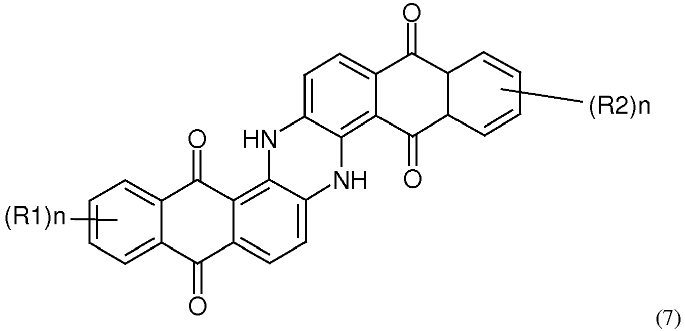 wobei
- R1 und R2 unabhängig voneinander für einen linearen oder verzweigten Alkylrest oder Halogen steht;
- n für eine natürliche Zahl zwischen 0 und 4 steht und
wobei das Farbmittel der Struktur (7) ein Schüttvolumen bestimmt nach DIN ISO 787-11 von 2 l/kg - 10 l/kg, eine spezifische Oberfläche bestimmt nach DIN 66132 von 5 m²/g - 60 m²/g, und einen pH-Wert bestimmt nach DIN ISO 787-9 von 4 - 9 aufweist
8a, 8b: 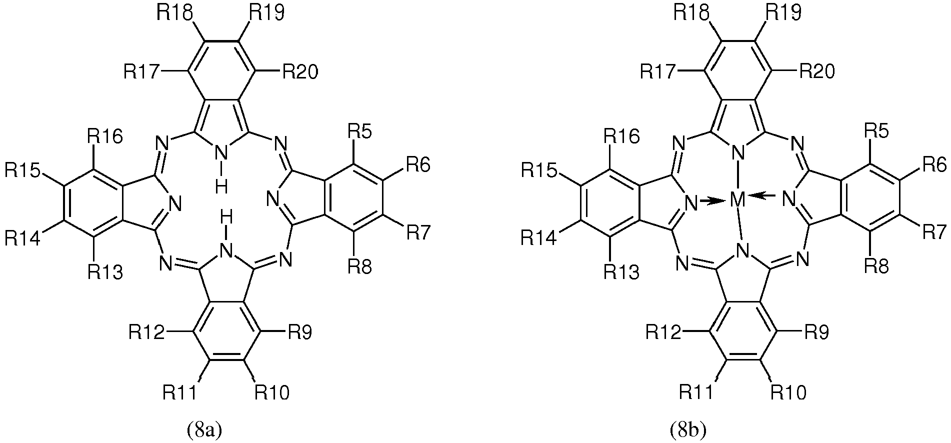 wobei
- die Reste R(5-20) jeweils unabhängig voneinander Wasserstoff, Methyl, Ethyl, Propyl, Isopropyl, Butyl, Isobutyl, tert.-Butyl, Pentyl, Neopentyl, Hexyl, Thexyl, Fluor, Chlor, Brom, Sulfon oder CN sind und
- M ist ausgewählt aus der Gruppe, die Aluminium, Nickel, Cobalt, Eisen, Zink, Kupfer und Mangan umfasst.

2. Zusammensetzung nach Anspruch 1, **dadurch gekennzeichnet, dass** die Zusammensetzung die Farbmittel der Strukturen (1a) und (1b) in einem 1:1 Isomerengemisch enthält.

3. Zusammensetzung nach Anspruch 1, **dadurch gekennzeichnet, dass** der im sichtbaren Bereich transparente thermoplastische Kunststoff ein Polycarbonat ist.

4. Zusammensetzung nach Anspruch 1, **dadurch gekennzeichnet, dass** das nanoskalige Pigment Ruß ist.

5. Zusammensetzung nach Anspruch 4, **dadurch gekennzeichnet, dass** der IR-Absorber in einem Anteil von 0,00150 Gew% - 0,01500 Gew.-%, berechnet als Feststoffanteil an Metallborid in der Polymergesamtzusammensetzung, enthalten ist und der Ruß in einem Anteil von 0 Gew.-% - 0,00135 Gew.-%, bezogen auf die Polymergesamtzusammensetzung, enthalten ist.

6. Zusammensetzung nach Anspruch 1, **dadurch gekennzeichnet, dass** die Farbmittel der Komponente d), bezogen auf die jeweilige Einzelkomponente, in Mengen von 0,00001 Gew.-% bis 0,30000 Gew.-% eingesetzt werden.

7. Zusammensetzung nach Anspruch 1, **dadurch gekennzeichnet, dass** die Zusammensetzung weitere Additive aus der Gruppe der UV-Absorber, Entformer, Thermo- und Verarbeitungsstabilisatoren enthält.

8. Verwendung einer Zusammensetzung nach Anspruch 1 zur Herstellung von Fahrzeug- und Gebäudeverscheibungen.

9. Fahrzeugscheibe oder Gebäudescheibe hergestellt aus einer Polymerzusammensetzung nach einem der Ansprüche 1 bis 7.

10. Fahrzeugscheibe oder Gebäudescheibe nach Anspruch 9, **dadurch gekennzeichnet, dass** diese eine Kratzfestbeschichtung mit UV-Absorber aufweist.

## Claims

1. Polymer composition containing
a. at least one thermoplastic which is transparent in the visible region;
b. at least lanthanum hexaboride and optionally further inorganic IR absorbers from the group which comprises boride compounds and tungstates and mixtures thereof,
c. optionally an inorganic, nano-scale pigment,
d. a colouring agent combination of structures selected from:
I. (1a) and/or (1b), (7),
II. (1a) and/or (1b), (4), (7),
III. (1a) and/or (1b), (5), (7),
IV. (3), (4),
V. (3), (5),
VI. (3), (4), (7),
VII. (6), (1a) and/or (1b), (7),
VIII. (1a) and/or (1b), (8),
where the structures are as follows:
1a, 1b: 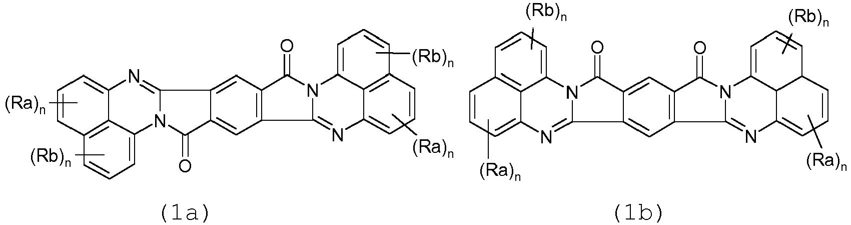 where
- Ra and Rb independently of one another represent a linear or branched alkyl radical, or halogen;
- n independently of the respective R represents a natural number from 0 to 3, the radical for n=0 being hydrogen;
3: 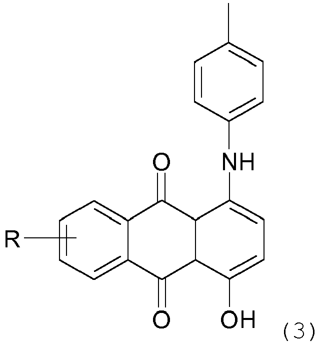 where
R is selected from the group consisting of H and p-methylphenylamine radical;
4 : 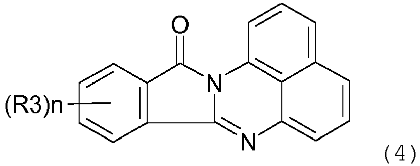 where
R3 is halogen;
n=4;
5: 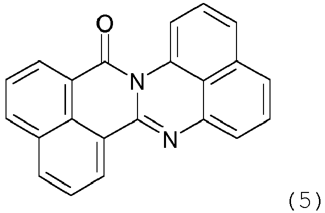
6: 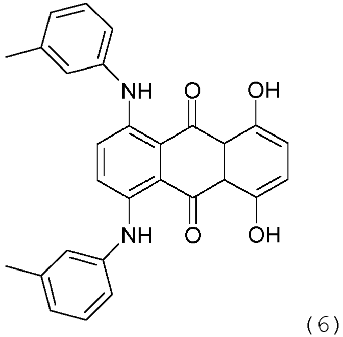
7 : 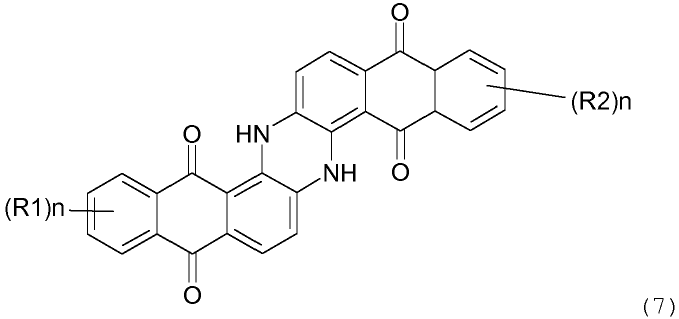 where
- R1 and R2 independently of one another represent a linear or branched alkyl radical, or halogen;
- n represents a natural number from 0 to 4 and
where the bulk volume of the colouring agent of the structure (7), determined in accordance with DIN ISO 787-11, is from 2 l/kg to 10 l/kg,
its specific surface area, determined in accordance with DIN 66132, is from 5 m²/g to 60 m²/g, and its pH, determined in accordance with DIN ISO 787-9, is from 4 to 9;
8a, 8b: 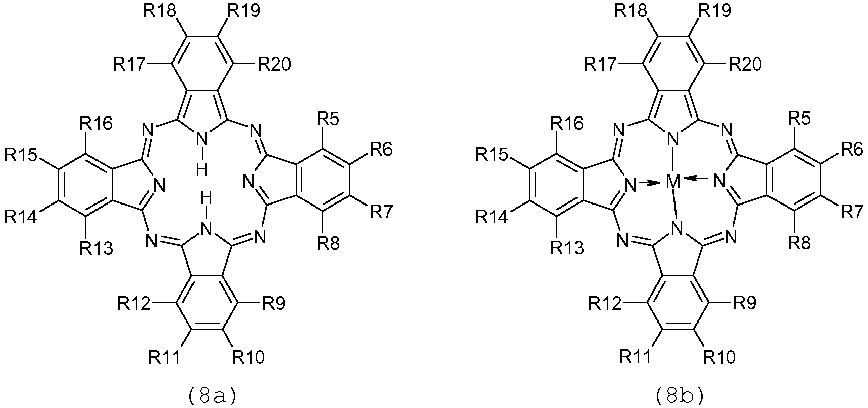 where
- the radicals R(5-20) each independently of the others are hydrogen, methyl, ethyl, propyl, isopropyl, butyl, isobutyl, tert-butyl, pentyl, neopentyl, hexyl, thexyl, fluorine, chlorine, bromine, sulfone or CN and
- M is selected from the group comprising aluminium, nickel, cobalt, iron, zinc, copper and manganese.

2. Composition according to Claim 1, **characterized in that** the composition contains the colouring agents of structures (1a) and (1b) in a 1:1 isomer mixture.

3. Composition according to Claim 1, **characterized in that** the thermoplastic which is transparent in the visible region is a polycarbonate.

4. Composition according to Claim 1, **characterized in that** the nano-scale pigment is carbon black.

5. Composition according to Claim 4, **characterized in that** the IR absorber is present in an amount of from 0.00150 wt.% to 0.01500 wt.%, calculated as solids content of metal boride in the polymer composition as a whole, and the carbon black is present in an amount of from 0 wt.% to 0.00135 wt.%, based on the polymer composition as a whole.

6. Composition according to Claim 1, **characterized in that** the colouring agents of component d) are used in amounts of from 0.00001 wt.% to 0.30000 wt.%, based on the individual component in question.

7. Composition according to Claim 1, **characterized in that** the composition contains further additives from the group of the UV absorbers, demoulding agents, heat stabilizers and processing stabilizers.

8. Use of a composition according to Claim 1 in the production of automotive and architectural glazings.

9. Automotive glazing or architectural glazing produced from a polymer composition according to any one of Claims 1 to 7.

10. Automotive glazing or architectural glazing according to Claim 9, **characterized in that** it has a scratch-resistant coating containing UV absorbers.

## Revendications

1. Composition polymère, contenant :
a. au moins un plastique thermoplastique transparent dans la gamme visible;
b. au moins de l'hexaborure de lanthane et éventuellement des absorbeurs IR inorganiques additionnels du groupe qui contient des composés de borure et des tungstates et des mélanges de ceux-ci ;
c. éventuellement un pigment inorganique nanométrique ;
d. une combinaison de colorants des structures choisies parmi :
I. (1a) et/ou (1b), (7),
II. (1a) et/ou (1b), (4), (7),
III. (1a) et/ou (1b), (5), (7),
IV. (3), (4),
V. (3), (5),
VI. (3), (4), (7),
VII. (6), (1a) et/ou (1b), (7),
VIII. (1a) et/ou (1b), (8),
les structures étant comme suit :
1a, 1b : 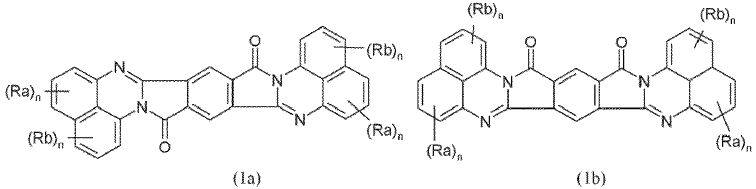 dans lesquelles
- Ra et Rb représentent indépendamment l'un de l'autre un radical alkyle linéaire ou ramifié ou halogène ;
- n représente indépendamment du R en question un nombre naturel compris entre 0 et 3, le radical pour n = 0 étant l'hydrogène ;
3 : 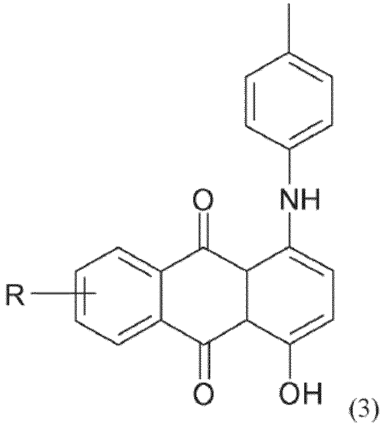 dans laquelle
R est choisi dans le groupe constitué par H et le radical p-méthylphénylamine ;
4 : 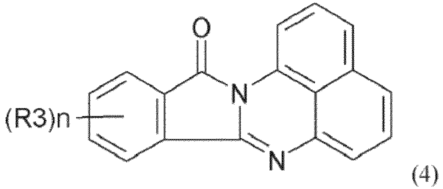 dans laquelle
R3 représente halogène ;
n = 4 ;
5 : 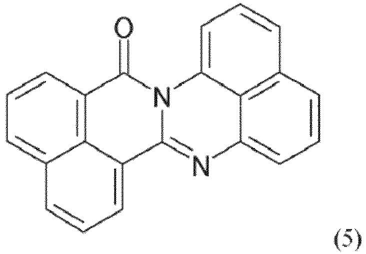
6 : 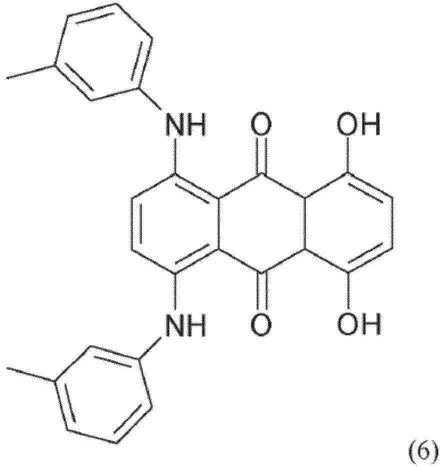
7 : 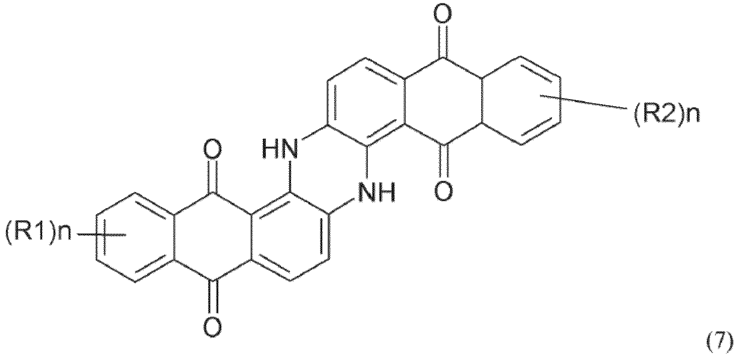 dans lesquelles
- R1 et R2 représentent indépendamment l'un de l'autre un radical alkyle linéaire ou ramifié ou halogène ;
- n représente un nombre naturel compris entre 0 et 4 et
le colorant de la structure (7) présentant une densité apparente, déterminée selon DIN ISO 787-11, de 2 l/kg à 10 l/kg, une surface spécifique, déterminée selon DIN 66132, de 5 m²/g à 60 m²/g et une valeur de pH, déterminée selon DIN ISO 787-9, de 4 à 9,
8a, 8b : 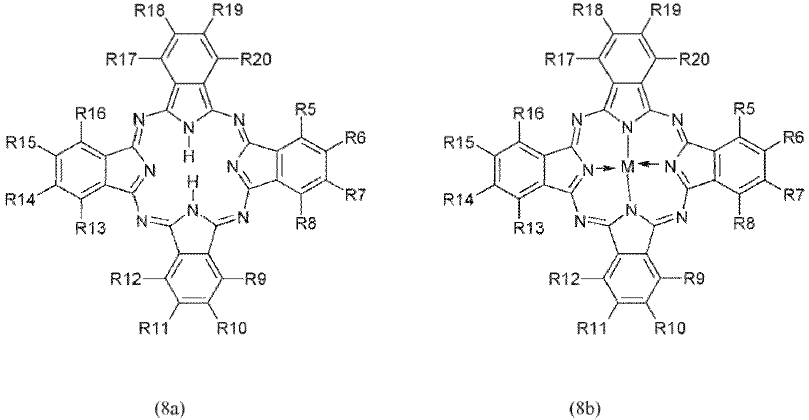 dans lesquelles
- les radicaux R(5-20) représentent indépendamment les uns des autres à chaque fois hydrogène, méthyle, éthyle, propyle, isopropyle, butyle, isobutyle, tert.-butyle, pentyle, néopentyle, hexyle, thexyle, fluor, chlore, brome, sulfone ou CN et
- M est choisi dans le groupe qui comprend aluminium, nickel, cobalt, fer, zinc, cuivre et manganèse.

2. Composition selon la revendication 1, **caractérisée en ce que** la composition contient les colorants des structures (1a) et (1b) dans un mélange d'isomères 1:1.

3. Composition selon la revendication 1, **caractérisée en ce que** le plastique thermoplastique transparent dans la gamme visible est un polycarbonate.

4. Composition selon la revendication 1, **caractérisée en ce que** le pigment nanométrique est du noir de carbone.

5. Composition selon la revendication 4, **caractérisée en ce que** l'absorbeur IR est contenu en une proportion de 0,00150 % en poids à 0,01500 % en poids, calculé en tant que teneur en solides de borure métallique dans la composition polymère totale, et le noir de carbone est contenu en une proportion de 0 % en poids à 0,00135 % en poids par rapport à la composition polymère totale.

6. Composition selon la revendication 1, **caractérisée en ce que** les colorants du composant d) sont utilisés par rapport au composant individuel en question en quantités de 0,00001 % en poids à 0,30000 % en poids.

7. Composition selon la revendication 1, **caractérisée en ce que** la composition contient d'autres additifs du groupe constitué par les absorbeurs UV, les démoulants, les stabilisateurs thermiques et d'usinage.

8. Utilisation d'une composition selon la revendication 1 pour la fabrication de vitrages automobiles et de bâtiments.

9. Vitre automobile ou vitre de bâtiment fabriquée à partir d'une composition polymère selon l'une quelconque des revendications 1 à 7.

10. Vitre automobile ou vitre de bâtiment selon la revendication 9, **caractérisée en ce que** celle-ci comprend un revêtement résistant aux éraflures contenant un absorbeur UV.
